# EUROPEAN PATENT APPLICATION

(11) **EP 4 446 788 A1**
(43) Date of publication of application: **16.10.2024**
(21) Application number: 21969643.2
(22) Date of filing: 30.12.2021
(51) Int. Cl.: G02B 6/293

(54) **WDM DEVICE AND MANUFACTURING METHOD THEREFOR, AND COMMUNICATION FACILITY**

(71) Applicant: Huawei Technologies Co., Ltd., Shenzhen, Guangdong 518129 (CN)
(72) Inventor: WU, Yangbo, Shenzhen, Guangdong 518129 (CN); JIANG, Qun, Shenzhen, Guangdong 518129 (CN); QIN, Yang, Shenzhen, Guangdong 518129 (CN)
(74) Representative: Pfenning, Meinig & Partner mbB
(86) International application number: PCT/CN2021/143381
(87) International publication number: WO 2023/123286

(57) **Abstract**

This application provides a wavelength division multiplexing WDM component. The WDM component includes a plurality of band-pass filters or a plurality of band-stop filters. The WDM component may further include a total reflection structure or a low-pass/high-pass filter. By using the WDM component, single-fiber multi-wavelength signals of a plurality of channels can be combined into a single-fiber multi-wavelength signal of one channel. In this way, optical signal processing costs are reduced.

## Description

### TECHNICAL FIELD

This application relates to the communication field, and more specifically, to a wavelength division multiplexing (wavelength division multiplexing, WDM) component, a manufacturing method, and a communication device.

### BACKGROUND

Fiber-optic communication is a common communication technology. For example, in a wireless communication system, fiber-optic communication is widely applied between base stations, between a core network and a base station, between core network devices, and between a baseband unit and a radio unit of a base station.

Wavelength division multiplexing (WDM) is a technology that is used to combine a plurality of optical signals of different wavelengths through a multiplexer and couple the signals to a same optical fiber for data transmission.

A small form-factor pluggable (small form-factor pluggable, SFP) is an optical module, and may implement optical-to-electrical conversion, that is, modulate an electrical signal to an optical wave to obtain an optical signal, and/or demodulate an optical signal to obtain an electrical signal. A single-wavelength optical signal of one channel output by the SFP or a single-wavelength optical signal of one channel input to the SFP is carried on an optical fiber for transmission. To improve transmission efficiency, through WDM, a single-fiber single-wavelength signal output by the SFP and a single-fiber single-wavelength signal input to the SFP may be combined into a single-fiber multi-wavelength signal for transmission.

Currently, industry application of a dual small form-factor pluggable (dual small form-factor pluggable, DSFP) is implemented due to advantages of dual-channel interfaces and a same encapsulation form as the small form-factor pluggable SFP. Limited by optical fiber density that may be supported by the SFP encapsulation form, the DSFP currently may support dual-channel single-fiber bidirectional optical signal processing, that is, BiDi (BiDirectional) optical signal processing.

However, for a current WDM component, a single WDM component does not support multiplexing processing of single-fiber multi-wavelength optical signals of a plurality of channels (also referred to as single-fiber multi-wavelength optical signals of a plurality of paths or a plurality of single-fiber multi-wavelength optical signals), for example, multiplexing processing of dual-channel (also referred to as dual-channel) single-fiber multi-directional optical signals of a DSFP. How to enable the single WDM component to support multiplexing processing of single-fiber multi-wavelength optical signals of a plurality of channels is an urgent problem to be resolved.

### SUMMARY

This application provides a WDM component, a WDM component manufacturing method, and a communication device, so that a single WDM component can support multiplexing processing of single-fiber multi-wavelength optical signals of a plurality of channels, and correspondingly, can also support demultiplexing processing of splitting a single-fiber multi-wavelength optical signal of one channel into single-fiber multi-wavelength optical signals of a plurality of channels.

According to a first aspect, this application further provides a wavelength division multiplexing WDM component, including:
at least two first incident ports, at least two band-stop filter groups, a first low-pass or high-pass filter group, and a first common port.

The at least two first incident ports include a first incident port I_{1,1} and a first incident port I_{1,2}. The first incident port I_{1,1} is configured to input a first input signal M₁ of a first channel having X1 wavelengths. The first incident port I_{1,2} is configured to input a first input signal N₁ of a second channel having Y1 wavelengths.

The at least two band-stop filter groups include a first band-stop filter group and a second band-stop filter group.

X1 first band-stop filters in the first band-stop filter group are configured to split the incident input signal M₁ of the first channel having the X1 wavelengths into single-wavelength signals of X1 channels: a signal M_{1,1} to a signal M_{1,X1}. The X1 wavelengths include an E_{1,1}^{th} wavelength to an E_{1,X1}^{th} wavelength. The single-wavelength signals of the X1 channels: the signal M_{1,1} to the signal M_{1,X1} are in a one-to-one correspondence with the E_{1,1}^{th} wavelength to the E_{1,X1}^{th} wavelength. The E_{1,1}^{th} wavelength to the E_{1,X1}^{th} wavelength are respectively in stopband ranges of the X1 first band-stop filters. An i1^{th} first band-stop filter in the X1 first band-stop filters is configured to: reflect a signal M_{1,i1} of an E_{1,i1}^{th} wavelength, and transmit a signal that is of a first another wavelength and that is input to the i1^{th} first band-stop filter. X1 is an integer greater than 1, i1 is an integer ranging from 1 to X1, and the first another wavelength belongs to the E_{1,1}^{th} wavelength to the E_{1,X1}^{th} wavelength.

Y1 second band-stop filters in the second band-stop filter group are configured to split the incident input signal N₁ of the second channel having the Y1 wavelengths into single-wavelength signals of Y1 channels: a signal N_{1,1} to a signal N_{1,Y1}. The Y1 wavelengths include an F_{1,1}^{th} wavelength to an F_{1,Y1}^{th} wavelength. The single-wavelength signals of the Y1 channels: the signal N_{1,1} to the signal N_{1,Y1} are in a one-to-one correspondence with the F_{1,1}^{th} wavelength to the F_{1,Y1}^{th} wavelength. The F_{1,1}^{th} wavelength to the F_{1,Y1}^{th} wavelength are respectively in stopband ranges of corresponding second band-stop filters in the Y1 second band-stop filters. Aj 1^{th} second band-stop filter in the Y1 second band-stop filters is configured to: reflect a signal N_{1,j1} of an F_{1,j1}^{th} wavelength, and transmit a signal that is of a second another wavelength and that is input to the j1^{th} second band-stop filter, where Y1 is an integer not less than 1, j 1 is an integer ranging from 1 to Y1, and the second another wavelength belongs to the F_{1,1}^{th} wavelength to the F_{1,Y1}^{th} wavelength.

W1 second band-stop filters in the second band-stop filter group are further configured to combine the single-wavelength signals of the X1 channels: the signal M_{1,1} to the signal M_{1,X1} with the single-wavelength signals of the Y1 channels respectively: the signal N_{1,1} to the signal N_{1,Y1}, to obtain multi-wavelength signals T_{1,t1=1...W1} of W1 channels, where W1 is a larger value in X1 and Y1. When X1 is greater than Y1, the W1 second band-stop filters include the Y1 second band-stop filters. When X1 is less than Y1, the W1 second band-stop filters are a part of the Y1 second band-stop filters. When X1 is equal to Y1, the W1 second band-stop filters are the Y1 second band-stop filters. The j1^{th} second band-stop filter in the Y1 second band-stop filters is further configured to transmit a signal M_{1,i1} that is input to the j1^{th} second band-stop filter, to obtain a multi-wavelength signal T_{1,t1}. The multi-wavelength signal T_{1,t1} has the E_{1,i1}^{th} wavelength and the F_{1,j1}^{th} wavelength, where t1 is an integer ranging from 1 to W1.

The first low-pass or high-pass filter group includes Z1 first low-pass or high-pass filters and is configured to combine multi-wavelength signals P_{1,1=1...Z1} of Z1 channels to obtain a single-channel multi-wavelength output signal Q₁. A multi-wavelength signal P_{1,t1} of a t1^{th} channel in multi-wavelength signals P_{1,t1=1...W1} of W1 channels in the multi-wavelength signals P_{1,1=1...Z1} of the Z1 channels includes a multi-wavelength signal T_{1,t1} of a t1^{th} channel in the multi-wavelength signals T_{1,t1=1...W1} of theW1 channels. The Z1 first low-pass or high-pass filters include W1 first low-pass or high-pass filters. The multi-wavelength signals P_{1,t1=1...W1} of the W1 channels are respectively in stopband ranges of corresponding first low-pass or high-pass filters in the W1 first low-pass or high-pass filters. A t1^{th} first low-pass or high-pass filter in the W1 first low-pass or high-pass filters is configured to: reflect the multi-wavelength signal P_{1,t1} of the t1^{th} channel, and transmit a signal that is of another wavelength and that is input to the t1^{th} first low-pass or high-pass filter, where k1 is an integer ranging from 1 to Z1, and Z1 is an integer greater than or equal to W1.

The first common port is configured to output the single-channel multi-wavelength output signal Q₁ obtained by the first low-pass or high-pass filter group.

By using the WDM component, optical signal processing costs can be reduced.

According to a second aspect, this application further provides a WDM component, including:
at least two first incident ports, at least one group of combiner-splitter structures, and a first common port.

The at least one group of combiner-splitter structures includes a first combiner-splitter structure.

The first combiner-splitter structure includes two band-pass filters and two total reflection structures.

The at least two first incident ports include a first incident port I_{1,1} and a first incident port I_{1,2}. The first incident port I_{1,1} is configured to input a first input signal M₁ of a first channel having two wavelengths, an E_{1,1}^{th} wavelength and an E_{1,2}^{th} wavelength. The first incident port I_{1,2} is configured to input a first input signal N₁ of a second channel having two wavelengths, an F_{1,1}^{th} wavelength and an F_{1,2}^{th} wavelength.

The two band-pass filters include a first band-pass filter and a second band-pass filter.

The two total reflection structures include a first total reflection structure and a second total reflection structure.

The first band-pass filter is configured to: transmit the E_{1,2}^{th} wavelength in the input signal M₁ of the first channel that is incident from the first incident port I_{1,1} and that has the two wavelengths, and reflect the E_{1,1}^{th} wavelength.

The first band-pass filter is further configured to reflect the F_{1,1}^{th} wavelength and the F_{1,2}^{th} wavelength in the input signal N₁ of the second channel that is incident from the first incident port I_{1,2} and that has the two wavelengths.

The first total reflection structure is configured to reflect the E_{1,1}^{th} wavelength from the first band-pass filter.

The second total reflection structure is configured to reflect the E_{1,2}^{th} wavelength, the F_{1,1}^{th} wavelength, and the F_{1,2}^{th} wavelength that are from the first band-pass filter.

The second band-pass filter is configured to: transmit the E_{1,1}^{th} wavelength from the first total reflection structure, and reflect the E_{1,2}^{th} wavelength, the F_{1,1}^{th} wavelength, and the F_{1,2}^{th} wavelength.

The first common port is configured to output a single-channel multi-wavelength signal Q₁, where wavelengths of the multi-wavelength signal Q₁ include the E_{1,1}^{th} wavelength, the E_{1,2}^{th} wavelength, the F_{1,1}^{th} wavelength, and the F_{1,2}^{th} wavelength.

By using the WDM component, optical signal processing costs can be reduced. The WDM component uses a band-pass filter, which is easier to implement than a band-stop filter because manufacturing of the band-pass filter is simpler.

According to a third aspect, this application further provides a WDM component, including:
at least two first exit ports, at least two band-stop filter groups, a first low-pass or high-pass filter group, and a first common port.

The first common port is configured to input a single-channel multi-wavelength output signal Q₁, where wavelengths of the single-channel multi-wavelength output signal Q₁ include an E_{1,1}^{th} wavelength to an E_{1,X1}^{th} wavelength, and an F_{1,1}^{th} wavelength to an F_{1,Y1}^{th} wavelength.

The first low-pass or high-pass filter group includes Z1 first low-pass or high-pass filters and is configured to obtain multi-wavelength signals P_{1,k1=1...Z1} of Z1 channels through splitting the single-channel multi-wavelength output signal Q₁. A multi-wavelength signal P_{1,t1} of a t1^{th} channel in multi-wavelength signals P_{1,t1=1...W1} of W1 channels in the multi-wavelength signals P_{1,k1=1...Z1} of the Z1 channels includes a multi-wavelength signal T_{1,t1} of a t1^{th} channel in multi-wavelength signals T_{1,t1=1...W1} of W1 channels. The Z1 first low-pass or high-pass filters include W1 first low-pass or high-pass filters. The multi-wavelength signals P_{1,t1=1...W1} of the W1 channels are respectively in stopband ranges of corresponding first low-pass or high-pass filters in the W1 first low-pass or high-pass filters. A t1^{th} first low-pass or high-pass filter in the W1 first low-pass or high-pass filters is configured to: reflect the multi-wavelength signal P_{1,t1} of the t1^{th} channel, and transmit a signal that is of another wavelength and that is input to the t1^{th} first low-pass or high-pass filter, where k1 is an integer ranging from 1 to Z1, and Z1 is an integer greater than or equal to W1. W1 second band-stop filters in the second band-stop filter group are configured to split the multi-wavelength signals T_{1,t1=1...W1} of the W1 channels into single-wavelength signals of X1 channels: a signal M_{1,1} to a signal M_{1,X1}, and single-wavelength signals of Y1 channels: a signal N_{1,1} to a signal N_{1,Y1}, where W1 is a larger value in X1 and Y1. When X1 is greater than Y1, the W1 second band-stop filters include the Y1 second band-stop filters. When X1 is less than Y1, the W1 second band-stop filters are a part of the Y1 second band-stop filters. When X1 is equal to Y1, the W1 second band-stop filters are the Y1 second band-stop filters. The single-wavelength signals of the X1 channels: the signal M_{1,1} to the signal M_{1,X1} are in a one-to-one correspondence with the E_{1,1}^{th} wavelength to the E_{1,X1}^{th} wavelength. The single-wavelength signals of the Y1 channels: the signal N_{1,1} to the signal N_{1,Y1} are in a one-to-one correspondence with the F_{1,1}^{th} wavelength to the F_{1,Y1}^{th} wavelength. The F_{1,1}^{th} wavelength to the F_{1,Y1}^{th} wavelength are respectively in stopband ranges of corresponding second band-stop filters of the Y1 second band-stop filters. A j1^{th} second band-stop filter in the Y1 second band-stop filters is configured to: transmit an E_{1,i1}^{th} wavelength in the signal T_{1,t1} that is input to the j1^{th} second band-stop filter, to obtain a single-wavelength signal M_{1,i1}; and reflect an F_{1,j1}^{th} wavelength in the signal T_{1,t1} that is input to the j1^{th} second band-stop filter, to obtain a single-wavelength signal N_{1,j1}, where t1 is an integer ranging from 1 to W1, Y1 is an integer not less than 1, and j 1 is an integer ranging from 1 to Y1.

The Y1 second band-stop filters are further configured to combine the single-wavelength signals of the Y1 channels: the signal N_{1,1} to the signal N_{1,Y1}, into an output signal N₁ of a second channel having Y1 wavelengths. The j1^{th} second band-stop filter in the Y1 second band-stop filters is further configured to transmit a signal that is of a second another wavelength and that is input to the j1^{th} second band-stop filter, where the second another wavelength belongs to the F_{1,1}^{th} wavelength to the F_{1,Y1}^{th} wavelength and does not include the F_{1,j1}^{th} wavelength.

X1 first band-stop filters in the first band-stop filter group are configured to combine the single-wavelength signals of the X1 channels: the signal M_{1,1} to the signal M_{1,X1}, into an output signal M₁ of a first channel having X1 wavelengths, where the X1 wavelengths include the E_{1,1}^{th} wavelength to the E_{1,X1}^{th} wavelength. The E_{1,1}^{th} wavelength to the E_{1,X1}^{th} wavelength are respectively in stopband ranges of the X1 first band-stop filters. An i 1 th first band-stop filter in the X1 first band-stop filters is configured to: reflect a signal M_{1,i1} of an E_{1,i1}^{th} wavelength, and transmit a signal that is of a first another wavelength and that is input to the i 1 th first band-stop filter. X1 is an integer greater than 1, i1 is an integer ranging from 1 to X1, and the first another wavelength belongs to the E_{1,1}^{th} wavelength to the E_{1,X1}^{th} wavelength.

The at least two first exit ports include a first exit port I_{1,1} and a first exit port I_{1,2}. The first exit port I_{1,1} is configured to output the first output signal M₁ of the first channel having the X1 wavelengths. The first incident port I_{1,2} is configured to output the first output signal N₁ of the second channel having the Y1 wavelengths.

In the WDM component, the band-stop filters are used, and one multi-wavelength signal is divided into a plurality of multi-wavelength signals, so that optical wave signal processing costs can be reduced.

According to a fourth aspect, this application further provides a wavelength division multiplexing WDM component, including:
at least two first exit ports, at least one group of combiner-splitter structures, and a first common port.

The first common port is configured to input a single-channel multi-wavelength signal Q₁, where wavelengths of the multi-wavelength signal Q₁ include an E_{1,1}^{th} wavelength, an E_{1,2}^{th} wavelength, an F_{1,1}^{th} wavelength, and an F_{1,2}^{th} wavelength.

The at least one group of combiner-splitter structures includes a first combiner-splitter structure.

The first combiner-splitter structure includes two band-pass filters and two total reflection structures.

The at least two first exit ports include a first exit port I_{1,1} and a first exit port I_{1,2}. The first exit port I_{1,1} is configured to output a first output signal M₁ of a first channel having two wavelengths, the E_{1,1}^{th} wavelength and the E_{1,2}^{th} wavelength. The first exit port I_{1,2} is configured to output a first output signal N₁ of a second channel having two wavelengths, the F_{1,1}^{th} wavelength and the F_{1,2}^{th} wavelength.

The two band-pass filters include a first band-pass filter and a second band-pass filter.

The two total reflection structures include a first total reflection structure and a second total reflection structure.

The second band-pass filter is configured to: transmit the E_{1,1}^{th} wavelength of the single-channel multi-wavelength signal Q₁ from the first common port, and reflect the E_{1,2}^{th} wavelength, the F_{1,1}^{th} wavelength, and the F_{1,2}^{th} wavelength.

The first total reflection structure is configured to reflect the E_{1,1}^{th} wavelength from the second band-pass filter.

The second total reflection structure is configured to reflect the E_{1,2}^{th} wavelength, the F_{1,1}^{th} wavelength, and the F_{1,2}^{th} wavelength that are from the second band-pass filter.

The first band-pass filter is configured to: transmit the E_{1,2}^{th} wavelength from the second total reflection structure, reflect the F_{1,1}^{th} wavelength and the F_{1,2}^{th} wavelength from the second total reflection structure, and reflect the E_{1,1}^{th} wavelength from the first total reflection structure, to obtain the first output signal M₁ of the first channel having the two wavelengths, the E_{1,1}^{th} wavelength and the E_{1,2}^{th} wavelength, and the output signal N₁ of the second channel having the two wavelengths, the F_{1,1}^{th} wavelength and the F_{1,2}^{th} wavelength.

In the WDM component, the band-pass filters are used, and one multi-wavelength signal is divided into a plurality of multi-wavelength signals, so that optical wave signal processing costs can be reduced. Moreover, compared with the band-stop filter, manufacturing of the band-pass filter is simpler.

According to a fifth aspect, this application further provides a wavelength division multiplexing WDM component, including two four-port thin film filters TFFs, a first TFF and a second TFF, where four ports include a port a, a port b, a port c, and a port d, and each TFF includes two fiber collimators.

A first band-pass filter is fastened to the first TFF and located between two fiber collimators of the first TFF. A second band-pass filter is fastened to the second TFF and located between two fiber collimators of the second TFF.

A signal 1 having a first wavelength and a second wavelength is input through a port a of the first TFF. The first wavelength is in a passband range of the first TFF. The second wavelength is in a stopband range of the first TFF. A signal 1-1 of the first wavelength is output from a port d. A signal 1-2 of the second wavelength is output from a port b.

A signal 2 having a third wavelength and a fourth wavelength is input through a port c of the first TFF. Both the third wavelength and the fourth wavelength are in the stopband range of the first TFF. The signal 2 having the third wavelength and the fourth wavelength is output from the port d.

The port c of the first TFF is connected with a port a of the second TFF. The port d of the first TFF is connected with a port c of the second TFF.

The second wavelength is in a passband range of the second TFF. The first wavelength, the third wavelength, and the fourth wavelength are all in the stopband range of the first TFF. The signal 1-1 having the first wavelength, the signal 1-2 having the second wavelength, and the signal 2 having the third wavelength and the fourth wavelength are combined into a signal having four wavelengths output from a port d of the second TFF.

Optionally, each of the foregoing TFFs further includes a sleeve.

The WDM component further includes a housing, configured to package the plurality of TFFs.

The WDM component uses a TFF structure with a built-in band-pass filter. With the TFF, assembly of the WDM is simpler.

According to a sixth aspect, this application further provides a wavelength division multiplexing WDM component, including two four-port thin film filters TFFs, a first TFF and a second TFF, where four ports include a port a, a port b, a port c, and a port d, and each TFF includes two fiber collimators.

A first band-stop filter is fastened to the first TFF and located between two fiber collimators of the first TFF. A second band-stop filter is fastened to the second TFF and located between two fiber collimators of the second TFF.

A signal 1 having a first wavelength and a second wavelength is input through a port a of the first TFF. The first wavelength is in a stopband range of the first TFF. The second wavelength is in a passband range of the first TFF. A signal 1-1 of the first wavelength is output from a port b. A signal 1-2 of the second wavelength is output from a port d.

A signal 2 having a third wavelength and a fourth wavelength is input through a port c of the first TFF. Both the third wavelength and the fourth wavelength are in the stopband range of the first TFF. The signal 2 having the third wavelength and the fourth wavelength is output from the port b.

The port b of the first TFF is connected with a port a of the second TFF. The port d of the first TFF is connected with a port c of the second TFF.

The second wavelength is in a stopband range of the second TFF. The first wavelength, the third wavelength, and the fourth wavelength are all in the passband range of the first TFF. The signal 1-1 having the first wavelength, the signal 1-2 having the second wavelength, and the signal 2 having the third wavelength and the fourth wavelength are combined into a signal having four wavelengths output from a port d of the second TFF.

Optionally, each of the foregoing TFFs further includes a sleeve.

The WDM component further includes a housing, configured to package the plurality of TFFs.

The WDM component uses a TFF structure with a built-in band-stop filter. With the TFF, assembly of the WDM is simpler.

According to a seventh aspect, this application further provides a wavelength division multiplexing WDM component, including a Z-Block structure. A plurality of isosceles right-angle triangular prism notches are separately disposed on two sides of the Z-Block structure. A right-angle surface of the isosceles right-angle triangular prism is perpendicular to the notch. Bevels of isosceles right-angle triangular prisms of notches on a same side are disposed in parallel. The notches on the two sides are disposed oppositely in a peer-to-peer manner with bevels disposed in parallel. Notches on a first side include a notch used for a first incident port. Notches on a second side include a notch used for a first common port. A first triangular prism filter is disposed in each of the notch used for the first incident port and a peer notch of the notch used for the first incident port. A band-stop filter thin film is plated on a bevel of the first triangular prism filter. A second triangular prism filter is disposed in each of the notch used for the first common port and a peer notch of the notch used for the first common port. A first low-pass or high-pass filter thin film is plated on a bevel of the second triangular prism filter. The band-stop filter thin film is configured to reflect a wavelength in a specific range. The first incident port is configured to input a single-channel signal having X wavelengths. The quantity X of wavelengths of a signal input through at least one notch used for the first incident port in the plurality of notches is an integer greater than 1. The first low-pass or high-pass filter thin film is configured to combine signals obtained based on single-channel multi-wavelength signals that are input through a plurality of first incident ports and that pass through the band-stop filter thin film, to obtain a single-channel signal having Y wavelengths. Y is a sum of quantities X of wavelengths input through all the first incident ports. The first common port is configured to output the single-channel signal that has the Y wavelengths and that is obtained through combination, where the bevel of the first triangular prism filter is parallel to a bevel of an isosceles right-angle triangular prism of a notch in which the first triangular prism filter is located, and the bevel of the second triangular prism filter is parallel to a bevel of an isosceles right-angle triangular prism of a notch in which the second triangular prism filter is located.

The WDM component uses the Z-block structure with the built-in band-stop filter thin film. With the Z-block, a size of the component can be smaller and costs are lower.

Optionally, the first low-pass or high-pass filter thin film plated on the bevel of the second triangular prism filter disposed in the peer notch of the notch used for the first common port is used for total reflection.

Optionally, the peer notch of the notch used for the first incident port is further used for a second incident port. The notches on the first side further include a notch used for a second common port. A third triangular prism filter is disposed in each of the notch used for the second common port and a peer notch of the notch used for the second common port. A second low-pass or high-pass filter thin film is plated on a bevel of the third triangular prism filter. The second low-pass or high-pass filter thin film is configured to combine signals obtained through combining single-channel signals input through the second incident port that has M wavelengths and that passes through the band-stop filter thin film, to obtain a single-channel signal having N wavelengths. The second common port is configured to output the single-channel signal that has the N wavelengths and that is obtained through combination. The quantity M of wavelengths of the signal input through at least one notch used for the second incident port in a plurality of peer notches is an integer greater than 1. N is a sum of quantities M of wavelengths input through all the second incident ports. The bevel of the third triangular prism filter is parallel to a bevel of an isosceles right-angle triangular prism of a notch in which the third triangular prism filter is located.

According to an eighth aspect, this application further provides a communication device, including the WDM component provided in any one of the foregoing aspects.

According to a ninth aspect, this application further provides a WDM component manufacturing method. By disposing and/or connecting components in the WDM component provided in any one of the foregoing aspects, the WDM component according to any one of the foregoing aspects is obtained.

For possible implementations of the aspects provided in this application, refer to the descriptions in the claims. Details are not described herein again.

By using the foregoing WDM component, optical signal processing costs, a link insertion loss, and link configuration complexity are reduced. Therefore, manual configuration costs are reduced.

### BRIEF DESCRIPTION OF DRAWINGS

FIG. 1 is a diagram of a WDM structure connected with a BiDi-DSFP;
FIG. 2 is a diagram of a structure of a WDM component according to an embodiment of this application;
FIG. 3 is a diagram of a structure of a double-density WDM component according to an embodiment of this application;
FIG. 4 is a diagram of a structure of a WDM component based on a Z-block according to an embodiment of this application;
FIG. 5 is a diagram of a structure of a band-stop TFF according to an embodiment of this application;
FIG. 6 is a diagram of a structure of a WDM component based on a band-stop TFF according to an embodiment of this application;
FIG. 7 is a diagram of another structure of a WDM component according to an embodiment of this application;
FIG. 8 is a diagram of still another structure of a WDM component according to an embodiment of this application;
FIG. 9 is a diagram of another structure of a double-density WDM component according to an embodiment of this application;
FIG. 10 is a diagram of another structure of a TFF according to an embodiment of this application;
FIG. 11 is a diagram of another structure of a WDM component based on a band-pass TFF according to an embodiment of this application;
FIG. 12 is a diagram of still another structure of a WDM component based on a band-pass TFF according to an embodiment of this application;
FIG. 13 is a diagram of yet another structure of a WDM component based on a band-pass TFF according to an embodiment of this application; and
FIG. 14 is a diagram of another structure of a WDM component based on a band-stop TFF according to an embodiment of this application.

### DESCRIPTION OF EMBODIMENTS

The following describes technical solutions of this application with reference to accompanying drawings.

The technical solutions in embodiments of this application can be applied to various communication systems, for example, a long term evolution (long term evolution, LTE) system, an LTE frequency division duplex (frequency division duplex, FDD) system, LTE time division duplex (time division duplex, TDD), a fifth generation (5th generation, 5G) system, new radio (new radio, NR), a wireless local area network (wireless local area network, WLAN) system, a broadcasting/television service (broadcasting/television service, BTS) system, or a future next-generation communication system.

An access network device in embodiments of this application may be a device configured to communicate with a terminal device. The access network device may also be referred to as an access device or a radio access network device, may be an evolved NodeB (evolved NodeB, eNB or eNodeB) in the LTE system, or may be a radio controller in a cloud radio access network (cloud radio access network, CRAN) scenario. Alternatively, the access network device may be a relay station, an access point, a vehicle-mounted device, a wearable device, an access network device in the 5G network, or an access network device in the future evolved PLMN network, may be an access point (access point, AP) in a WLAN, a node in the BTS, or a gNB in the new radio (new radio, NR) system. This is not limited in embodiments of this application.

In addition, in embodiments of this application, the access network device is a device in a radio access network (radio access network, RAN), or in other words, a RAN node that connects a terminal device to a wireless network. For example, by way of example, and not limitation, the access network device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In a network structure, the access network device may include a RAN device including a central unit (central unit, CU) node and a distributed unit (distributed unit, DU) node, or may be a RAN device including a CU control plane node (CU-CP node), a CU user plane node (CU-UP node), and a DU node.

The access network device provides a service for a cell. The terminal device communicates with the access network device by using a transmission resource (for example, a frequency domain resource, in other words, a spectrum resource) used for the cell. The cell may be a cell corresponding to the access network device (for example, a base station), and the cell may belong to a macro base station, or may belong to a base station corresponding to a small cell (small cell). The small cell herein may include: a metro cell (metro cell), a micro cell (micro cell), a pico cell (pico cell), a femto cell (femto cell), and the like. These small cells have features of small coverage and low transmit power, and are suitable for providing a high-rate data transmission service.

In embodiments of this application, a core network device is a device in a core network (core network, CN) that provides service support for a terminal device. Currently, examples of some core network devices are: an access and mobility management function (access and mobility management function, AMF) entity, a session management function (session management function, SMF) entity, a user plane function (user plane function, UPF) entity, and the like, which are not listed one by one herein. For example, the AMF entity may be responsible for access management and mobility management of a terminal. The SMF entity may be responsible for session management, for example, user session establishment. The UPF entity may be a functional entity on a user plane, and is mainly responsible for connecting to an external network.

It should be noted that, the entity in this application may also be referred to as a network element or a functional entity. For example, the AMF entity may also be referred to as an AMF network element or an AMF functional entity. For another example, the SMF entity may also be referred to as an SMF network element, an SMF functional entity, or the like.

The technical solutions in embodiments of this application may be applied to fiber-optic communication in a communication system, including but not limited to fiber-optic communication between access network devices, fiber-optic communication between an access network device and a core network device, fiber-optic communication between a CU node and a DU node, fiber-optic communication between core network devices, fiber-optic communication between a BBU of an access network device and a radio unit (radio unit, RU), and the like.

Wavelength division multiplexing (WDM) is a technology that combines a plurality of optical signals of different wavelengths through a multiplexer and couples the signals to a same optical fiber for data transmission. Wavelength division multiplexing (WDM) is used to combine optical carrier signals (carrying various information) of two or more wavelengths at a transmitting end through a multiplexer and couple the signals to the same optical fiber of an optical line for transmission. At a receiving end, optical carriers of different wavelengths are separated through a demultiplexer and then processed by an optical receiver to restore the original signals. WDM features large capacity, long distance, and low costs. Large capacity means that light in an optical fiber is composed of a plurality of wavelengths, and each wavelength can carry different information independently. In this way, more information can be transmitted. Long distance means that an optical transmission loss is much lower than an electrical transmission loss. Low cost means that costs of manufacturing optical fibers are low. WDM can be classified into dense wavelength division multiplexing (dense wavelength division multiplexing, DWDM) and coarse wavelength division multiplexing (CWDM). In a DWDM system, a spacing between wavelengths is small, for example, 0.8 nm, 0.4 nm, or 0.2 nm. In a CWDM system, a spacing between wavelengths is large, for example, 20 nm. Currently, DWDM is the mainstream. A quantity of optical wavelengths that can be used for transmission in a single fiber is 32, 40, 80, 96, 106, or 160. Currently, 40-wavelength and 80-wavelength systems are mainly used.

A small form-factor pluggable (SFP) is an optical module, and may implement optical-to-electrical conversion, that is, modulate an electrical signal to an optical wave, to obtain an optical signal, and/or demodulate an electrical signal from the optical signal. A single-wavelength optical signal of one channel output by the SFP or a single-wavelength optical signal of one channel input to the SFP is carried on an optical fiber for transmission. To improve transmission efficiency, through WDM, a single-fiber single-wavelength signal output by the SFP and a single-fiber single-wavelength signal input to the SFP may be combined into a single-fiber multi-wavelength signal for transmission.

Currently, industry application of a dual small form-factor pluggable (dual small form-factor pluggable, DSFP) is implemented due to advantages of dual-channel interfaces and a same encapsulation form as the small form-factor pluggable (SFP). Limited by optical fiber density supported by the SFP encapsulation form, the DSFP currently supports dual-channel single-fiber bidirectional optical signal processing, that is, BiDi (BiDirectional) optical signal processing.

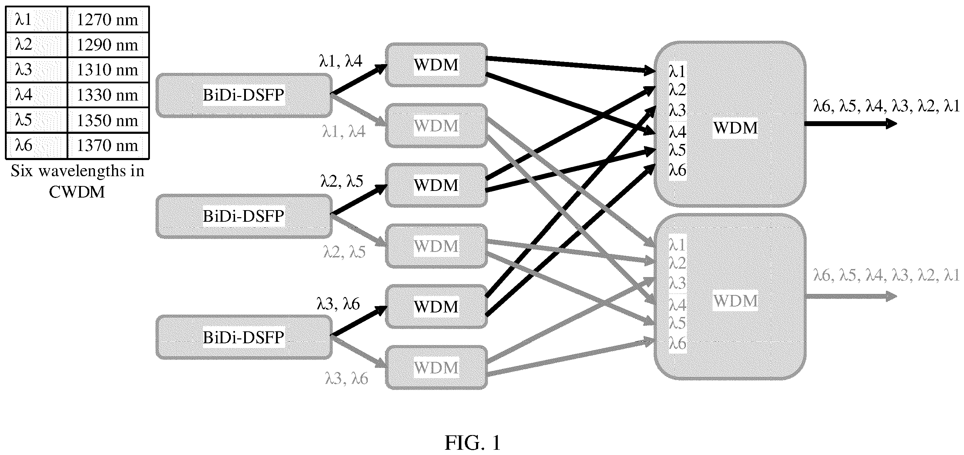

FIG. 1 is a diagram of a WDM structure connected with a BiDi-DSFP. In this diagram, an example in which there are BiDi-DSFPs of three channels is used. The BiDi-DSFP components of three channels process signals from λ₁ to λ₆ of wavelengths of six channels. CWDM is used as an example. For example, wavelengths of λ₁ to λ₆ are 1270 nm, 1290 nm, 1310 nm, 1330 nm, 1350 nm and 1370 nm. A BiDi-DSFP component of each channel processes signals of two channels having two wavelengths. For example, both signals of two channels processed by a BiDi-DSFP of a first channel include λ₁ and λ₄, both signals of two channels processed by a BiDi-DSFP of a second channel include λ₂ and λ₅, and both signals of two channels processed by a BiDi-DSFP of a third channel include λ₃ and λ₆. To combine the signals of the six channels each having two wavelengths processed by the BiDi-DSFP components of the three channels into signals of two channels each having six wavelengths, the WDM structure shown in FIG. 1 uses six 1x2 WDM components and two 1x6 WDM components, where three 1x2 WDM components obtain six signals processed by one 1x6 WDM component, and the six signals respectively have wavelengths from λ₁ to λ₆. It may be understood that an arrow in the accompanying drawings in this application indicates optical wave combination, but does not represent a transmission direction of a signal carried by an optical wave. Signals carried by optical waves may be in a same direction, or some signals may be opposite to the other signals. For example, signals carried by λ₁ and λ₄ may be opposite. This is not limited herein.

It can be learned that, in the solution in FIG. 1, a plurality of WDM components are needed to form a WDM structure. For example, in addition to two 1x6 WDM components, six 1x2 WDM components are also needed. In this case, costs are high, a link insertion loss is large, link configuration is complex, and manual configuration costs are increased. However, for a current WDM component, a single WDM component does not support multiplexing processing of single-fiber multi-wavelength optical signals of a plurality of channels (also referred to as single-fiber multi-wavelength optical signals of a plurality of paths or a plurality of single-fiber multi-wavelength optical signals), for example, multiplexing processing of dual-channel (also referred to as dual-path) single-fiber multi-directional optical signals of a DSFP.

In view of this, embodiments of this application provide a plurality of WDM components, so that a single WDM component can support multiplexing processing of single-fiber multi-wavelength optical signals of a plurality of channels. It may be understood that multiplexing processing and demultiplexing processing are two inverse processes. The WDM component provided in embodiments of this application can also support demultiplexing processing of splitting a single-fiber multi-wavelength optical signal into single-fiber multi-wavelength optical signals of a plurality of channels. In the following embodiments, only multiplexing processing is used as an example for description, and the demultiplexing processing may be obtained by reversing the multiplexing processing. Details are not described again. By using the WDM components provided in embodiments of this application, optical signal processing costs, a link insertion loss, and link configuration complexity are reduced. Therefore, manual configuration costs are reduced.

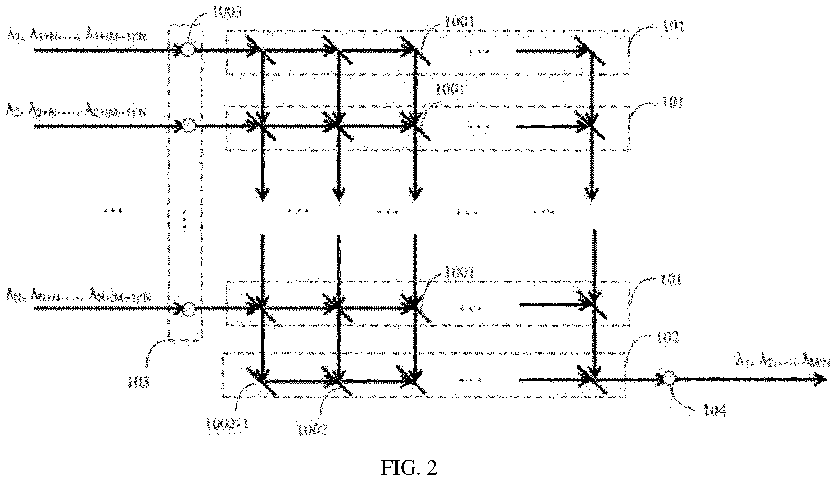

FIG. 2 is a diagram of a structure of a WDM component according to an embodiment of this application.

The WDM component uses a band-stop filter. The band-stop filter reflects only a wavelength in a specific range, and transmits a wavelength beyond the specific range.

FIG. 2 is described by using an example in which single-fiber multi-wavelength signals processed by the WDM component include N channels, each channel includes M wavelengths, and there is an offset of N wavelengths between two wavelengths in the M wavelengths. Through multiplexing processing of the WDM component, a single-fiber multi-wavelength signal with wavelengths from λ₁ to λ_{*M***N*} may be obtained. M is a positive integer greater than or equal to 2, and N is a positive integer greater than or equal to 2.

For example, when the WDM component implements CWDM, single-fiber multi-wavelength signals of three channels may be included, and wavelengths included by the single-fiber multi-wavelength signals of the three channels respectively are λ₁ and λ₄, λ₂ and λ₅, λ₃ and λ₆.

The WDM component may include:
a first incident port group 103, where the first incident port group includes N first incident ports 1003;
N band-stop filter groups 101, where each of the N band-stop filter groups 101 includes M band-stop filters 1001;
a first low-pass or high-pass filter group 102, including M low-pass or high-pass filters 1002, where each of the M filters may be a low-pass or high-pass filter, which is not limited herein; and
a first common port 104.

The M wavelengths included in the single-fiber multi-wavelength signal of each channel are respectively in stopband ranges of the M band-stop filters 1001 for processing the single-fiber multi-wavelength signal. In this way, by successively passing through the M band-stop filters 1001, the single-fiber multi-wavelength signal of the channel may be divided into single-wavelength signals of M channels.

The M band-stop filters 1001 in the band-stop filter groups of the N channels are also correspondingly disposed. To be specific, a single-wavelength signal of one channel obtained through splitting the single-fiber multi-wavelength signal of each channel passes through a corresponding band-stop filter 1001 in another band-stop filter group, to obtain a signal of one channel having N wavelengths. For example, a single-wavelength signal of one channel, for example, λ₁, obtained through splitting a single-fiber multi-wavelength signal of a first channel passes through a band-stop filter 1001 in a band-stop filter group of a second channel; combines with a single-wavelength signal of one channel, for example, λ₂, obtained through splitting a single-fiber multi-wavelength signal of a second channel, to obtain a multi-wavelength signal of one channel, for example, λ₁ and λ₂; then passes through a band-stop filter 1001 in a band-stop filter group of a third channel; and combines with a single-wavelength signal of one channel, for example, λ₃, obtained through splitting a single-fiber multi-wavelength signal of a third channel, to obtain a multi-wavelength signal of one channel, for example, λ₁, λ₂, and λ₃. The rest may be deduced by analogy. In this way, a signal of one channel having N wavelengths, for example, λ₁ to λ*_{N}*, can be obtained. In this way, signals of M channels each having N wavelengths are obtained.

The M low-pass or high-pass filters 1002 in the first low-pass or high-pass filter group 102 are also disposed correspondingly with the M band-stop filters 1001 in the band-stop filter group of each channel, so as to sequentially reflect an input optical wave to a next low-pass or high-pass filter 1002, to obtain a single-channel signal having M*N wavelengths and input the single-channel signal having the M*N wavelengths into the first common port 104.

Optionally, in the WDM component shown in FIG. 2, a 1^{st} first low-pass or high-pass filter 1002-1 in the first low-pass or high-pass filter group 101, that is, a first low-pass or high-pass filter corresponding to a band-stop filter from which a first single-wavelength signal is obtained through split in M band-stop filters 1001 of each channel, is a total reflector.

By using the WDM component shown in FIG. 2, a single WDM component can combine single-fiber multi-wavelength signals of a plurality of channels into a single-channel single-fiber multi-wavelength signal. This reduces optical signal processing costs, a link insertion loss, and link configuration complexity. Therefore, manual configuration costs are reduced.

Quantities of wavelengths included in the single-fiber multi-wavelength signals of the N channels processed by the WDM component in this embodiment of this application may be separately determined. In other words, the quantities of wavelengths may be the same or different, and wavelength values included in the single-fiber multi-wavelength signals of the N channels may also be separately determined. For example, the quantities of wavelengths and the wavelength values may be determined based on a system setting requirement. This is not limited herein.

Therefore, based on the principle of the WDM component in FIG. 2, an embodiment of this application may provide a more general WDM component.

The WDM component may include:
at least two first incident ports, at least two band-stop filter groups, a first low-pass or high-pass filter group, and a first common port.

The at least two first incident ports include a first incident port I_{1,1} and a first incident port I_{1,2}. The first incident port I_{1,1} is configured to input a first input signal M₁ of a first channel having X1 wavelengths. The first incident port I_{1,2} is configured to input a first input signal N₁ of a second channel having Y1 wavelengths.

The at least two band-stop filter groups include a first band-stop filter group and a second band-stop filter group.

X1 first band-stop filters in the first band-stop filter group are configured to split the incident input signal M₁ of the first channel having the X1 wavelengths into single-wavelength signals of X1 channels: a signal M_{1,1} to a signal M_{1,X1}. The X1 wavelengths include an E_{1,1}^{th} wavelength to an E_{1,X1}^{th} wavelength. The single-wavelength signals of the X1 channels: the signal M_{1,1} to the signal M_{1,X1} are in a one-to-one correspondence with the E_{1,1}^{th} wavelength to the E_{1,X1}^{th} wavelength. The E_{1,1}^{th} wavelength to the E_{1,X1}^{th} wavelength are respectively in stopband ranges of the X1 first band-stop filters. An i1^{th} first band-stop filter in the X1 first band-stop filters is configured to: reflect a signal M_{1,i1} of an E_{1,i1}^{th} wavelength, and transmit a signal that is of a first another wavelength and that is input to the i1^{th} first band-stop filter. X1 is an integer greater than 1, i1 is an integer ranging from 1 to X1, and the first another wavelength belongs to the E_{1,1}^{th} wavelength to the E_{1,X1}^{th} wavelength.

Y1 second band-stop filters in the second band-stop filter group are configured to split the incident input signal N₁ of the second channel having the Y1 wavelengths into single-wavelength signals of Y1 channels: a signal N_{1,1} to a signal N_{1,Y1}. The Y1 wavelengths include an F_{1,1}^{th} wavelength to an F_{1,Y1}^{th} wavelength. The single-wavelength signals of the Y1 channels: the signal N_{1,1} to the signal N_{1,Y1} are in a one-to-one correspondence with the F_{1,1}^{th} wavelength to the F_{1,Y1}^{th} wavelength. The F_{1,1}^{th} wavelength to the F_{1,Y1}^{th} wavelength are respectively in stopband ranges of corresponding second band-stop filters in the Y1 second band-stop filters. A j1^{th} second band-stop filter in the Y1 second band-stop filters is configured to: reflect a signal N_{1,j1} of an F_{1,j1}^{th} wavelength, and transmit a signal that is of a second another wavelength and that is input to the j1^{th} second band-stop filter. Y1 is an integer not less than 1, j 1 is an integer ranging from 1 to Y1, and the second another wavelength belongs to the F_{1,1}^{th} wavelength to the F_{1,Y1}^{th} wavelength.

W1 second band-stop filters in the second band-stop filter group are further configured to combine the single-wavelength signals of the X1 channels: the signal M_{1,1} to the signal M_{1,X1} with the single-wavelength signals of the Y1 channels respectively: the signal N_{1,1} to the signal N_{1,Y1}, to obtain multi-wavelength signal T_{1,t1=1...W1} of W1 channels, where W1 is a larger value in X1 and Y1. When X1 is greater than Y1, the W1 second band-stop filters include the Y1 second band-stop filters. When X1 is less than Y1, the W1 second band-stop filters are a part of the Y1 second band-stop filters. When X1 is equal to Y1, the W1 second band-stop filters are the Y1 second band-stop filters. The j1^{th} second band-stop filter in the Y1 second band-stop filters is further configured to transmit a signal M_{1,i1} that is input to the j1^{th} second band-stop filter, to obtain a multi-wavelength signal T_{1,t1}. The multi-wavelength signal T_{1,t1} has the E_{1,i1}^{th} wavelength and the F_{1,j1}^{th} wavelength, where t1 is an integer ranging from 1 to W1.

The first low-pass or high-pass filter group includes Z1 first low-pass or high-pass filters and is configured to combine multi-wavelength signals P_{1,k1=1...Z1} of Z1 channels to obtain a single-channel multi-wavelength output signal Q₁. A multi-wavelength signal P_{1,t1} of a t1^{th} channel in multi-wavelength signals P_{1,t1=1...W1} of W1 channels in the multi-wavelength signals P_{1,k1=1...Z1} of the Z1 channels includes a multi-wavelength signal T_{1,t1} of a t1^{th} channel in the multi-wavelength signals T_{1,t1=1...W1} of theW1 channels. The Z1 first low-pass or high-pass filters include W1 first low-pass or high-pass filters. The multi-wavelength signals P_{1,t1=1...W1} of the W1 channels are respectively in stopband ranges of corresponding first low-pass or high-pass filters in the W1 first low-pass or high-pass filters. A t1^{th} first low-pass or high-pass filter in the W1 first low-pass or high-pass filters is configured to: reflect the multi-wavelength signal P_{1,t1} of the t1^{th} channel, and transmit a signal that is of another wavelength and that is input to the t1^{th} first low-pass or high-pass filter, where k1 is an integer ranging from 1 to Z1, and Z1 is an integer greater than or equal to W1.

The first common port is configured to output the single-channel multi-wavelength output signal Q₁ obtained by the first low-pass or high-pass filter group.

It may be understood that, when X1=Y1=Z1=W1=M, the E_{1,1}^{th} wavelength to the E_{1,X1}^{th} wavelength included in the X1 wavelengths are respectively λ₁,λ_{1+*N*} ...,λ_{1+(*M*-1)**N*}, and the F_{1,1}^{th} wavelength to the F_{1,Y1}^{th} wavelength included in the Y1 wavelengths are respectively λ₂,λ_{2+*N*},...,λ_{2+(*M*-1)**N*}, the WDM component is the WDM component shown in FIG. 2.

The WDM component shown in FIG. 2 can obtain only a signal of one channel having M*N wavelengths, that is, λ₁ to λ_{*M**}*_{N}.* An embodiment of this application further provides a double-density WDM component, to multiplex N band-stop filter groups 101, so that the double-density WDM component can be used together with a BiDi-DSFP, that is, connected with the BiDi-DSFP component, to obtain signals having M*N wavelengths of two channels.

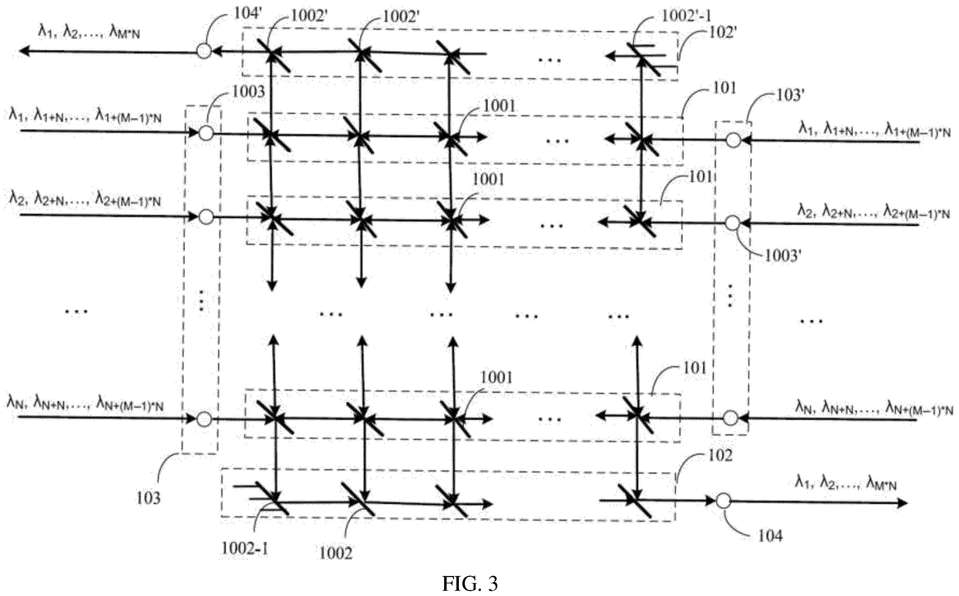

FIG. 3 is a diagram of a structure of a WDM component, that is, a double-density WDM component, according to an embodiment of this application.

Based on the WDM component shown in FIG. 2, the WDM component may further include a second incident port group 103', a second low-pass or high-pass filter group 102', and a second common port 104'.

The second low-pass or high-pass filter group 102' may include M second low-pass or high-pass filters 1002', and the second incident port group 103' includes N second incident ports 1003'.

The WDM component shown in FIG. 3 is described by using an example in which optical waves input by the N second incident ports 1003' are the same as the optical waves input by the N first incident ports 1003 respectively.

N band-stop filter groups 101 in the WDM component further process single-fiber multi-wavelength signals of N channels input through the second incident port group 103'. A processing process is the same as the process of processing the single-fiber multi-wavelength signals of the N channels input through the first incident port group 103, to obtain the signals of the M channels each having N wavelengths. A specific processing process is not described herein again.

The M second low-pass or high-pass filters 1002' have a same function as the M first low-pass or high-pass filters 1002 in FIG. 2, and sequentially reflect an input optical wave to a next low-pass or high-pass filter 1002', to obtain a single-channel signal having M*N wavelengths and input the single-channel signal having the M*N wavelengths into the second common port 104'.

Optionally, in the WDM component shown in FIG. 3, a 1^{st} second low-pass or high-pass filter 1002'-1 in the second low-pass or high-pass filter group 102', that is, a second low-pass or high-pass filter corresponding to a band-stop filter from which a first single-wavelength signal is obtained through split in M band-stop filters 1001 of each channel, is a total reflector.

By using the WDM component, double-density single-fiber multi-wavelength signals of a plurality of channels can be combined into a single-channel single-fiber multi-wavelength signal, or a double-density single-channel single-fiber multi-wavelength signal may be split into single-fiber multi-wavelength signals of a plurality of channels. This reduces optical signal processing costs, a link insertion loss, and link configuration complexity. Therefore, manual configuration costs are reduced.

As described above, the WDM component shown in FIG. 3 is described by using an example in which optical waves input by the N second incident ports 1003' are the same as the optical waves input by the N first incident ports 1003 respectively.

Based on the principles of the WDM components in FIG. 2 and FIG. 3, an embodiment of this application may provide a more general double-density WDM component.

Based on the more general WDM component provided in the embodiment shown in FIG. 2, the double-density WDM component further includes:
at least two second incident ports, a second low-pass or high-pass filter group, and a second common port.

The at least two second incident ports include a second incident port I_{2,1} and a second incident port I_{2,2}. The second incident port I_{2,1} is configured to input a second input signal M₂ of a first channel having X2 wavelengths. The second incident port I_{2,2} is configured to input a second input signal N₂ of a second channel having Y2 wavelengths.

X2 first band-stop filters in the X1 first band-stop filters in the first band-stop filter group are further configured to split the X2 wavelengths of the incident input signal M₂ of the first channel having X3 wavelengths into single-wavelength signals of X2 channels: a signal M_{2,1} to a signal M_{2,X2}. The X2 wavelengths include an E_{2,1}^{th} wavelength to an E_{2,X2}^{th} wavelength. The single-wavelength signals of the X2 channels: the signal M_{2,1} to the signal M_{2,X2} are in a one-to-one correspondence with the E_{2,1}^{th} wavelength to the E_{2,X2}^{th} wavelength. The E_{2,1}^{th} wavelength to the E_{2,X2}^{th} wavelength are respectively in stopband ranges of the X2 first band-stop filters. The i1^{th} first band-stop filter in the X1 first band-stop filters is further configured to: reflect a signal M_{2,i1} of an E_{2,i1}^{th} wavelength, and transmit a signal that is of a third another wavelength and that is input to the i1^{th} first band-stop filter. X2 is an integer not less than 1 and not greater than X1, the third another wavelength belongs to the E_{2,1}^{th} wavelength to the E_{2,X2}^{th} wavelength, and X3 is an integer greater than or equal to X2.

Y2 second band-stop filters in the Y1 second band-stop filters of the second band-stop filter group are further configured to split the Y2 wavelengths in the incident input signal N₂ of the second channel having Y3 wavelengths into single-wavelength signals of Y2 channels: a signal N_{2,1} to a signal N_{2,Y2}. The Y2 wavelengths include an F_{2,1}^{th} wavelength to an F_{2,Y2}^{th} wavelength. The single-wavelength signals of the Y2 channels: the signal N_{2,1} to the signal N_{2,Y2} are in a one-to-one correspondence with the F_{2,1}^{th} wavelength to the F_{2,Y2}^{th} wavelength. The F_{2,1}^{th} wavelength to the F_{2,Y2}^{th} wavelength are respectively in stopband ranges of corresponding second band-stop filters in the Y2 second band-stop filters. The j1^{th} second band-stop filter in the Y1 second band-stop filters is further configured to: reflect a signal N_{2,j1} of an F_{2,j1}^{th} wavelength, and transmit a signal that is of a fourth another wavelength and that is input to the j1^{th} second band-stop filter. The fourth another wavelength belongs to the F_{2,1}^{th} wavelength to the F_{2,Y2}^{th} wavelength, Y2 is an integer not less than 1 and not greater than Y1, and Y3 is an integer greater than or equal to Y2.

W2 first band-stop filters in the first band-stop filter group are further configured to combine single-wavelength signals of Y2 channels: the signal N_{2,1} to a signal N_{2,X2} with single-wavelength signals of X2 channels respectively: the signal M_{2,1} to a signal M_{2,Y1}, to obtain multi-wavelength signals T_{2,t2=1...W2} of W2 channels. W2 is a larger value in X2 and Y2. When X2 is greater than Y2, the W2 first band-stop filters include the X2 first band-stop filters. When X2 is less than Y2, the W2 first band-stop filters are a part of the X2 first band-stop filters. When X2 is equal to Y2, the W2 first band-stop filters are the X2 first band-stop filters. The i1^{th} first band-stop filter in the X1 first band-stop filters is further configured to transmit the signal N_{2,j1} that is input to the i1^{th} first band-stop filter to obtain a multi-wavelength signal T_{2,t2}. The multi-wavelength signal T_{2,t2} has the E_{2,i1}^{th} wavelength and the F_{2,j1}^{th} wavelength, where t2 is an integer ranging from 1 to W2.

The second low-pass or high-pass filter group includes Z2 first low-pass or high-pass filters and is configured to combine multi-wavelength signals P_{2,k2=1...Z2} of Z2 channels to obtain a single-channel multi-wavelength output signal Q₂. A multi-wavelength signal P_{2,t2} of a t2^{th} channel in multi-wavelength signals P_{2,t2=1...W2} of W2 channels in the multi-wavelength signals P_{2,k2=1...Z2} of the Z2 channels includes a multi-wavelength signal T_{2,t2} of a t2^{th} channel in the multi-wavelength signals T_{2,t2=1...W2} of the W2 channels. The Z2 first low-pass or high-pass filters include W2 first low-pass or high-pass filters. The multi-wavelength signals P_{2,t1=1...W2} of the W2 channels are respectively in stopband ranges of corresponding first low-pass or high-pass filters in the W2 first low-pass or high-pass filters. A t2^{th} first low-pass or high-pass filter in the W2 first low-pass or high-pass filters is configured to: reflect the multi-wavelength signal P_{2,t2} of the t2^{th} channel, and transmit a signal that is of another wavelength and that is input to the t2^{th} first low-pass or high-pass filter, where k2 is an integer ranging from 1 to Z2, and Z2 is an integer greater than or equal to W2.

The second common port is configured to output the single-channel multi-wavelength output signal Q₂ obtained by the second low-pass or high-pass filter group.

It may be understood that, when X3=X2=Y3=Y2=Z2=W2=M, the E_{2,1}^{th} wavelength to the E_{2,X2}^{th} wavelength included in the X2 wavelengths are respectively λ₁,λ_{1+*N*},...,λ_{1+(*M*-1)**N*}, and the F_{2,1}^{th} wavelength to the F_{2,Y2}^{th} wavelength are respectively λ₂,λ_{2+*N*},...,λ_{2+(M-1)**N*}, the double-density WDM component is the double-density WDM component shown in FIG. 3.

Based on the structure of the WDM component shown in FIG. 2 or FIG. 3, an embodiment of this application further provides a WDM component based on Z-Block.

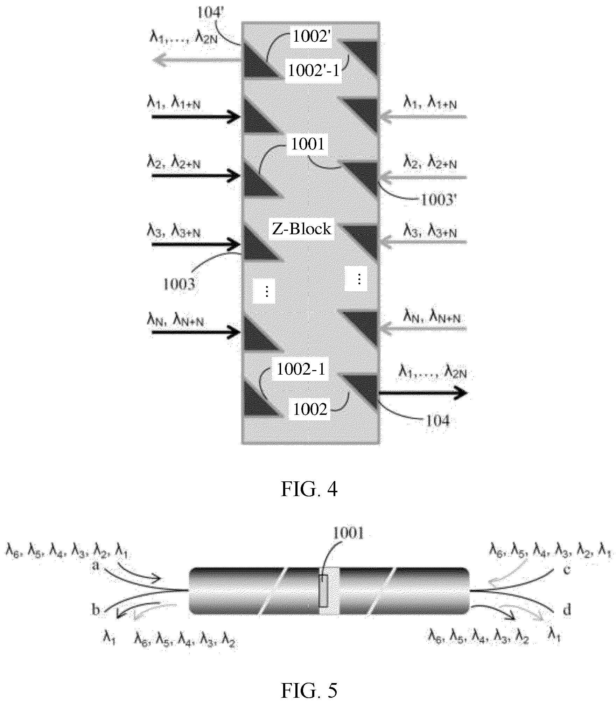

FIG. 4 is a diagram of a WDM component based on Z-Block according to an embodiment of this application.

The WDM component is described based on an example in which each of the single-fiber multi-wavelength signals of the N channels in the WDM component shown in FIG. 2 or FIG. 3 includes two wavelengths.

The WDM component may include:
a Z-Block structure.

N isosceles right-angle triangular prism notches are separately disposed on two sides of the Z-Block structure. A right-angle surface of the isosceles right-angle triangular prism is perpendicular to the notch. Bevels of isosceles right-angle triangular prisms of notches on a same side are disposed in parallel. The notches on the two sides are disposed oppositely in a peer-to-peer manner with bevels disposed in parallel. Notches on a first side include a notch used for the first incident port 1003. Notches on a second side include a notch used for the first common port 104. A first triangular prism filter is disposed in each of the notch used for the first incident port 1003 and a peer notch of the notch used for the first incident port. A band-stop filter thin film is plated on a bevel of the first triangular prism filter. A second triangular prism filter is disposed in each of the notch used for the first common port and a peer notch of the notch used for the first common port. A first low-pass or high-pass filter thin film is plated on a bevel of the second triangular prism filter. The band-stop filter thin film is a band-stop filter 1001 included in the at least two band-stop filter groups. The first low-pass or high-pass filter thin film is a low-pass or high-pass filter 1002 included in the first low-pass or high-pass filter group.

Optionally, the first low-pass or high-pass filter thin film plated on the bevel of the second triangular prism filter disposed in the peer notch of the notch used for the first common port is used for total reflection, that is, the 1^{st} first low-pass or high-pass filter 1002-1.

Optionally, the peer notch of the notch used for the first incident port is further used for the second incident port 1003'. The notches on the first side further include a notch used for the second common port 104'. A third triangular prism filter is disposed in each of the notch used for the second common port and a peer notch of the notch used for the second common port. A second low-pass or high-pass filter thin film is plated on a bevel of the third triangular prism filter. The second low-pass or high-pass filter thin film is a low-pass or high-pass filter 1002' included in the second low-pass or high-pass filter group. In this way, the double-density WDM component may be implemented, to further reduce the optical signal processing costs, a link insertion loss, and link configuration complexity. Therefore, manual configuration costs are reduced.

Optionally, the second low-pass or high-pass filter thin film plated on the bevel of the third triangular prism filter disposed in the peer notch of the notch used for the second common port is used for total reflection, that is, the 1^{st} second low-pass or high-pass filter 1002'-1.

The foregoing WDM component shown in FIG. 4 is implemented based on the Z-Block structure. An embodiment of this application further provides a WDM component based on a thin-film filter (thin-film filter, TFF).

FIG. 5 is a diagram of a structure of a TFF used for band-stop filtering.

The TFF includes four ports, and the four ports are respectively a port a, a port b, a port c, and a port d.

Optionally, the TFF may include a sleeve and two fiber collimators.

A band-stop filter 1001 is fastened to the TFF, and optionally, may be located between the two fiber collimators of the TFF.

For example, a single multi-wavelength signal having wavelengths λ₁ to λ₆ is input through the port a of the TFF, and the band-stop filter 1001 reflects the wavelength λ₁ and transmits other wavelengths. The port b outputs a single multi-wavelength signal having a wavelength λ₁. The port d outputs a signal having wavelengths λ₂ to λ₆.

Optionally, the TFF may further implement demultiplexing processing on a multi-wavelength signal of another channel. For example, if a single multi-wavelength signal having wavelengths λ₁ to λ₆ is input through the port c, the port d outputs a single multi-wavelength signal having a wavelength λ₁, and the port b outputs a signal having wavelengths λ₂ to λ₆.

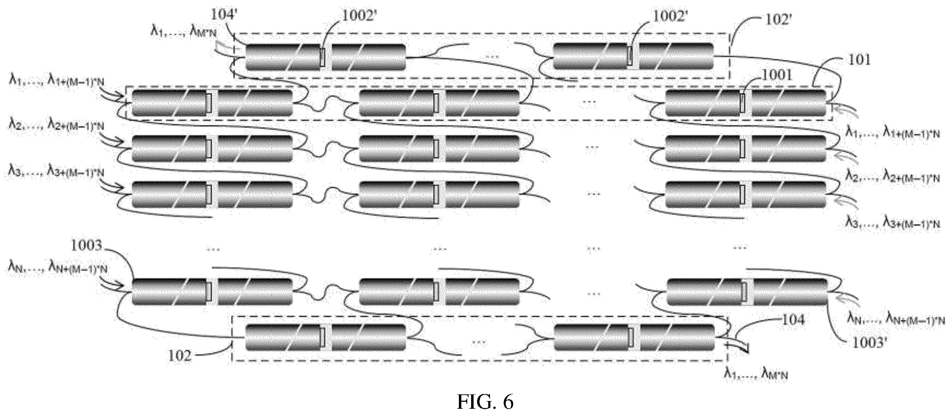

Based on the TFF shown in FIG. 5, a WDM component provided in an embodiment of this application is shown in FIG. 6.

The WDM component includes band-stop TFF groups 101 of N channels. The band-stop TFF groups respectively correspond to the band-stop filter groups 101 in FIG. 2 or FIG. 3. A TFF group of each channel includes M band-stop TFFs 1001 respectively corresponding to the band-stop filters 1001 in FIG. 2 or FIG. 3.

The WDM component further includes a TFF group 102 of one channel, for example, a first low-pass or high-pass TFF group 102, corresponding to the first low-pass or high-pass filter group 102 in FIG. 2 or FIG. 3. The first low-pass or high-pass TFF group 102 includes M first low-pass or high-pass TFFs 1002 respectively corresponding to the first low-pass or high-pass filters 1002 in FIG. 2 or FIG. 3. In other words, first low-pass or high-pass filters 1002 are fastened to the M first low-pass or high-pass TFFs 1002.

Optionally, the WDM component may further include a TFF group 102' of one channel, for example, a second low-pass or high-pass TFF group 102', corresponding to the second low-pass or high-pass filter group 102' in FIG. 2 or FIG. 3. The second low-pass or high-pass TFF group 102' includes M second low-pass or band-pass TFFs 1002' respectively corresponding to the first low-pass or band-pass filters 1002' in FIG. 2 or FIG. 3. In other words, second low-pass or band-pass filters 1002' are fastened to the M second low-pass or high-pass TFFs 1002'.

A connection relationship between the TFFs included in the WDM component is shown in FIG. 6. For a *v*^{th} band-stop TFF in each column of the band-stop TFF groups 101 of the N channels, that is, in the *v*^{th} row, one signal having a plurality of wavelengths is input through a port a of the band-stop TFF. For example, the plurality of wavelengths include one or a combination of λ*ᵥ*,λ_{*v*+*N*,...,}λ_{*v*+(*M*-1)**N*}, where *v* ∈ {1,2, ..., *N*}, and *M* and *N* are integers greater than or equal to 2; and a signal having a plurality of wavelengths is output from a port b. For example, the plurality of wavelengths include one or a combination of λ*ᵥ*,λ_{*v*+1},λ_{*v*+2,...,}λ_{*v*+(*N*-1)}, where *v* ∈ {1,2, ... , *N*}. A port d of the *v*^{th} band-stop TFF is connected with a port a of a next band-stop TFF of the row in which the *v*^{th} band-stop TFF is located. For example, if the *v*^{th} band-stop TFF is located in a *u*^{th} column, the next band-stop TFF is a band-stop TFF in a (*u* + 1)^{th} column. In this way, a wavelength other than a wavelength, for example, λ_{*v*+(*u*-1)**N*}, where *u* is an integer ranging from 1 to M, in a stopband range of the band-stop TFF in the *v*^{th} row and a *u*^{th} column in the λ*ᵥ*,λ_{*v*+*N*,...,}λ_{*v*+(*M*-1)**N*} is input to the next band-stop TFF of the row in which the *v*^{th} band-stop TFF is located, that is, the band-stop TFF in the *v*^{th} row and (*u* + 1)^{th} column, where *v* ∈ {1,2, ..., *N*}, and *M* and *N* are integers greater than or equal to 2. The port b of the band-stop TFF in the *v*^{th} row and the *u*^{th} column is connected to a port c of a band-stop TFF in a (*v* + 1)^{th} row and the *u*^{th} column. In this way, when a band-stop TFF in an N^{th} row and the *u*^{th} column outputs a signal having a plurality of wavelengths λ*ᵥ* to λ_{*v*+(*N*-1)} to the first low-pass or high-pass TFF group 102, for example, into a port a or a port c of a *u*^{th} first low-pass or high-pass TFF 1002 in the first low-pass or high-pass TFF group 102. For example, when *u* = 1, the signal is input to the port a of the first low-pass or high-pass TFF 1002; or when *u* ≠ 1, the signal is input to the port c of the first low-pass or high-pass TFF 1002. A port d of the *u*^{th} first low-pass or high-pass TFF 1002 is connected with a port a of a (*u* + 1)^{th} first low-pass or high-pass TFF 1002, so that a port d of a last first low-pass or high-pass TFF 1002, that is, an M^{th} first low-pass or high-pass TFF 1002 corresponding to a TFF from which a last wavelength obtained through splitting the plurality of wavelengths λ*ᵥ*,λ_{*v*+*N*,...,}λ_{*v*+(*M*-1)**N*}, outputs a signal having a plurality of wavelengths λ₁ to λ_{*M***N*}, where *v* ∈ {1,2, ..., *N*}. λ₁ to λ*_{N}* are in a passband range of the 1^{st} first low-pass or high-pass TFF 1002. λ_{1+*N*} to λ_{*N*+*N*} are in a stopband range of the u^{th} first low-pass or high-pass TFF 1002. λ₁ to λ_{*N***u*} are in the passband range of the u^{th} first low-pass or high-pass TFF 1002. λ_{1+*N***u*} to λ_{*N*+*N***u*} are in a stopband range of the u^{th} first low-pass or high-pass TFF 1002. By analogy, λ₁ to λ_{*N**(*M*-1)} are in a passband range of the M^{th} first low-pass or high-pass TFF 1002, and from the M^{th} first low-pass or high-pass TFF 1002, λ_{1+*N**(*M*-1)} to λ_{*N*+*N**(*M*-1)} are in the stopband range of the M* first low-pass or high-pass TFF 1002, so that a port d of the M^{th} first low-pass or high-pass TFF 1002 outputs a signal having wavelengths λ₁ to λ_{*N**}*_{M}.*

Optionally, when the WDM component includes the second low-pass or high-pass TFF group 102', a port d of an M^{th} band-stop TFF 1001 of each of the band-stop TFF groups 101 of the N channels in the WDM component may be further configured to input a multi-wavelength signal, for example, the wavelengths λ*ᵥ*,λ_{*v*+*N*,...,}λ_{*v*+(*M*-1)**N*}, where *v* ∈ {1,2, ..., *N*}, and *M* and *N* are integers greater than or equal to 2; and a port c of each band-stop TFF in the band-stop TFF groups of the N channels is further configured to output a signal having a corresponding wavelength. In other words, each band-stop TFF in the band-stop TFF groups of the N channels is further multiplexed to perform multiplexing/demultiplexing processing in a direction opposite to the foregoing direction, so that a band-stop TFF in a first row of the *u*^{th} column outputs a signal having a plurality of wavelengths λᵥ to λ_{*v*+(*N*-1)} into the second low-pass or high-pass TFF group 102', for example, into a port d or a port b of a *u*^{th} second low-pass or high-pass TFF 1002' in the second low-pass or high-pass TFF group 102'. For example, when *u* = *M*, the signal is input to the port d of the second low-pass or high-pass TFF 1002'; or when *u* ≠ *M*, the signal is input to the port b of the second low-pass or high-pass TFF 1002'. A port a of the *u*^{th} second low-pass or high-pass TFF 1002' is connected with a port d of a *u* - 1^{th} second low-pass or high-pass TFF 1002', so that a port a of a 1^{st} second low-pass or high-pass TFF 1002', that is, the 1^{st} second low-pass or high-pass TFF 1002' corresponding to a TFF from which a first wavelength is obtained through splitting the plurality of wavelengths λ*ᵥ*,λ_{*v*+*N*,...,}λ_{*v*+(*M*-1)**N*}, outputs a signal having the plurality of wavelengths λ₁ to λ_{*M***N*}, where *v* ∈ {1,2, ... , *N*}.

By using the foregoing WDM component based on the TFF, optical signal processing costs, a link insertion loss, and link configuration complexity are reduced. Therefore, manual configuration costs are reduced.

In the foregoing embodiments shown in FIG. 2 to FIG. 6, the WDM component is implemented based on the band-stop filter. An embodiment of this application further provides a WDM component, and the WDM component is implemented based on a band-pass filter.

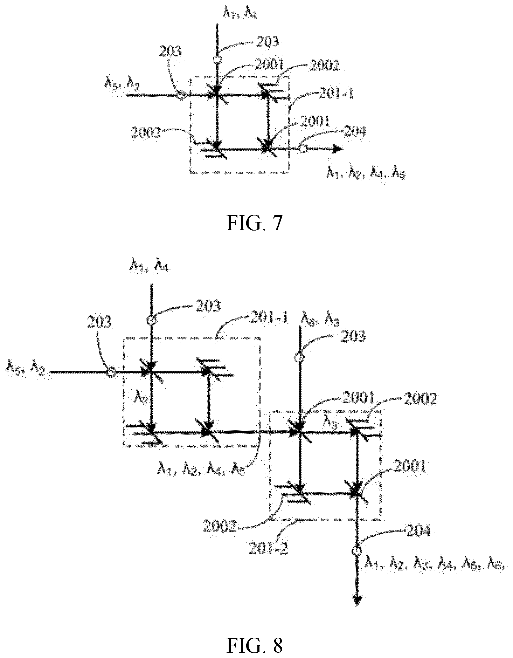

As shown in FIG. 7, the WDM component may include:
at least two first incident ports 203, at least one group of combiner-splitter structures, and a first common port 204.

The at least one group of combiner-splitter structures includes a first combiner-splitter structure 201-1.

The first combiner-splitter structure 201-1 includes two band-pass filters 2001, namely, a first band-pass filter and a second band-pass filter, and two low-pass or high-pass filter structures or two total reflection structures, such as a first total reflection structure 2002 and a second total reflection structure 2002.

The band-pass filter is configured to transmit a wavelength in a specific range and reflect a wavelength beyond the specific range.

Optionally, positions of the two band-pass filters 2001 are diagonal, and positions of the two total reflection structures 2002 are diagonal.

Wavelengths λ₁,λ₂,λ₄, and λ₅ are used as examples. The first band-pass filter 2001 in the two band-pass filters 2001 is configured to: transmit one of the wavelengths λ₂ and λ₅, for example, λ₂, and reflect the other one and the incident wavelengths λ₁ and λ₄, where the wavelengths λ₁ and λ₄ may come from the first incident port 203. The second band-pass filter 2001 in the two band-pass filters 2001 is configured to transmit another wavelength that is different from the wavelength transmitted by the first band-pass filter 2001 in the wavelengths λ₂ and λ₅, for example, λ₅, and reflect the wavelength transmitted by the first band-pass filter 2001, for example λ₂, and the wavelengths λ₁ and λ₄. The two total reflection structures 2002 are separately configured to reflect signals from the two band-pass filters 2001, so that a signal having the wavelengths λ₁,λ₂,λ₄, and λ₅ can be obtained in the first common port 204.

Optionally, the wavelengths λ₁,λ₂,λ₄, and λ₅ are λ₁,λ₂,λ₄, and λ₅ in the foregoing CWDM.

More general descriptions of this solution are provided as follows.

The at least two first incident ports include a first incident port I_{1,1} and a first incident port I_{1,2}. The first incident port I_{1,1} is configured to input a first input signal M₁ of a first channel having two wavelengths, an E_{1,1}^{th} wavelength and an E_{1,2}^{th} wavelength. The first incident port I_{1,2} is configured to input a first input signal N₁ of a second channel having two wavelengths, an F_{1,1}^{th} wavelength and an F_{1,2}^{th} wavelength.

The two band-pass filters include a first band-pass filter 2001 and a second band-pass filter 2001.

The two total reflection structures include a first total reflection structure 2002 and a second total reflection structure 2002.

The first band-pass filter 2001 is configured to: transmit the E_{1,2}^{th} wavelength in the input signal M₁ of the first channel that is incident from the first incident port I_{1,1} and that has the two wavelengths, and reflect the E_{1,1}^{th} wavelength.

The first band-pass filter 2001 is further configured to reflect the F_{1,1}^{th} wavelength and the F_{1,2}^{th} wavelength in the input signal N₁ of the second channel that is incident from the first incident port I_{1,2} and that has the two wavelengths.

The first total reflection structure 2002 is configured to reflect the E_{1,1}^{th} wavelength from the first band-pass filter.

The second total reflection structure 2002 is configured to reflect the E_{1,2}^{th} wavelength, the F_{1,1}^{th} wavelength, and the F_{1,2}^{th} wavelength that are from the first band-pass filter.

The second band-pass filter 2001 is configured to transmit the E_{1,1}^{th} wavelength from the first total reflection structure and reflect the E_{1,2}^{th} wavelength, the F_{1,1}^{th} wavelength, and the F_{1,2}^{th} wavelength.

The first common port 204 is configured to output a single-channel multi-wavelength signal Q₁, where wavelengths of the multi-wavelength signal Q₁ include the E_{1,1}^{th} wavelength, the E_{1,2}^{th} wavelength, the F_{1,1}^{th} wavelength, and the F_{1,2}^{th} wavelength.

It may be understood that, in the foregoing more general solution, the E_{1,1}^{th} wavelength and the E_{1,2}^{th} wavelength respectively correspond to the wavelengths λ₂ and λ₅ in FIG. 7, and the F_{1,1}^{th} wavelength and the F_{1,2}^{th} wavelength respectively correspond to the wavelengths λ₁ and λ₄ in FIG. 7. The first band-pass filter corresponds to a band-pass filter in the upper-left corner in FIG. 7, and the second band-pass filter corresponds to a band-pass filter in the lower-right corner in FIG. 7.

By using the WDM component provided in the foregoing embodiment, combination of dual-wavelength signals of two channels can be implemented, that is, a signal of one channel having four wavelengths is obtained. In this way, optical signal processing costs, a link insertion loss, and link configuration complexity are reduced. Therefore, manual configuration costs are reduced.

Further, based on the WDM component shown in FIG. 7, in an embodiment of this application, the component may be further extended to combine dual-wavelength signals of three channels into a six-wavelength signal of one channel.

As shown in FIG. 8, based on the WDM component shown in FIG. 7, the WDM component may further include a second combiner-splitter structure 201-2.

Based on the more general descriptions in FIG. 7, in the WDM component,
the second combiner-splitter structure 201-2 may include two band-pass filters and two total reflection structures.

The two band-pass filters included in the second combiner-splitter structure include a third band-pass filter and a fourth band-pass filter.

The two total reflection structures included in the second combiner-splitter structure include a third total reflection structure and a fourth total reflection structure.

The third band-pass filter is configured to: reflect a G_{1,1}^{th} wavelength in an input signal C₁ of a third channel that is incident from the first incident port I_{1,3} and that has two wavelengths, and transmit a G_{1,2}^{th} wavelength, where the G_{1,2}^{th} wavelength is located in a passband range of the third band-pass filter.

The third band-pass filter is further configured to reflect the E_{1,1}^{th} wavelength, the E_{1,2}^{th} wavelength, the F_{1,1}^{th} wavelength, and the F_{1,2}^{th} wavelength that are from the second band-pass filter.

The third total reflection structure is configured to reflect the G_{1,2}^{th} wavelength, the E_{1,1}^{th} wavelength, the E_{1,2}^{th} wavelength, the F_{1,1}^{th} wavelength, and the F_{1,2}^{th} wavelength that are from the third band-pass filter.

The fourth total reflection structure is configured to reflect the G_{1,1}^{th} wavelength from the third band-pass filter.

The fourth band-pass filter is configured to transmit the G_{1,1}^{th} wavelength from the fourth total reflection structure and reflect the G_{1,2}^{th} wavelength, the E_{1,2}^{th} wavelength, the E_{1,1}^{th} wavelength, the F_{1,1}^{th} wavelength, and the F_{1,2}^{th} wavelength that are from the third total reflection structure.

The single-channel multi-wavelength signal Q₁ output by the first common port further includes the G_{1,1}^{th} wavelength and the G_{1,2}^{th} wavelength.

It may be understood that, in the foregoing descriptions, the G_{1,1}^{th} wavelength and the G_{1,2}^{th} wavelength in the input signal C₁ of the third channel having the two wavelengths respectively correspond to the wavelengths λ₃ and λ₆ in FIG. 8. The first band-pass filter in the first combiner-splitter structure 201-1 in FIG. 8 is a band-pass filter in an upper-left corner, and transmits the wavelength λ₅ and reflects the wavelengths λ₁,λ₂, and λ₄. The second band-pass filter in the first combiner-splitter structure 201-1 is a band-pass filter in a lower-right corner, and transmits the wavelength λ₂ and reflects the wavelengths λ₁,λ₄, and λ₅. The third band-pass filter in the second combiner-splitter structure 201-2 is a band-pass filter in the upper-left corner, and transmits a wavelength λ₆ and reflects the wavelengths λ₁,λ₂,λ₄,λ₅, and λ₃. The fourth band-pass filter in the second combiner-splitter structure 201-2 is a band-pass filter in a lower-right corner, and transmits the wavelength λ₃ and reflects the wavelengths λ₁,λ₂,λ₄,λ₅, and λ₆. In this way, the signal having the wavelengths λ₁ to λ₆ is obtained. In this way, the first common port 204 may output the signal that is obtained by the fourth band-pass filter and that has the wavelengths λ₁ to λ₆. It may be understood that FIG. 8 is a specific example. There may be another setting for a specific passband range of the band-pass filter, for example, a setting based on a wavelength that needs to be processed. This is not limited herein.

By using the WDM component provided in the foregoing embodiment, combination of dual-wavelength signals of three channels can be implemented, that is, a signal of one channel having six wavelengths is obtained. Optical signal processing costs are further reduced.

Further, based on the WDM component shown in FIG. 7, an embodiment of this application further provides a double-density WDM component.

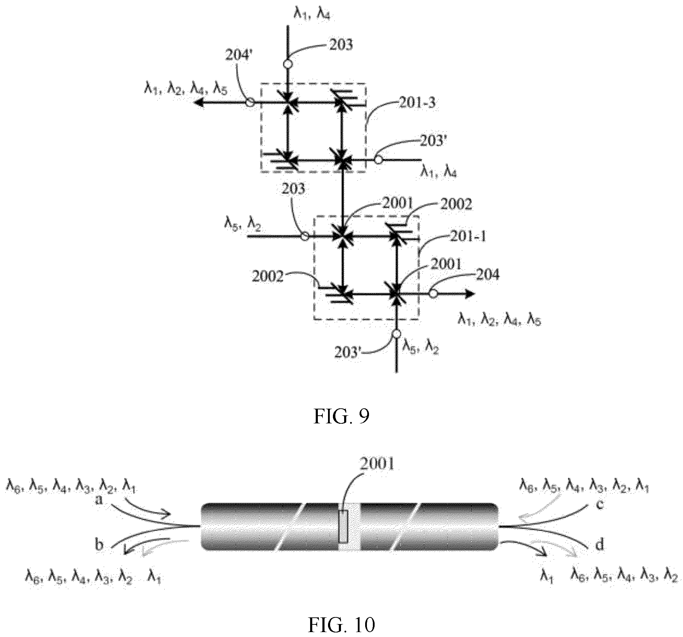

As shown in FIG. 9, the WDM component is based on the WDM component shown in FIG. 7, and the at least one group of combiner-splitter structures further includes a third combiner-splitter structure 201-3, at least two second incident ports 203', and a second common port 204'.

The third combiner-splitter structure 201-3 includes two band-pass filters, for example, a fifth band-pass filter and a sixth band-pass filter, and further includes two low-pass or high-pass filters or two total reflection structures, for example, a fifth total reflection structure and a sixth total reflection structure.

The second band-pass filter 2001 of the first combiner-splitter structure 201-1 is further configured to receive a signal having wavelengths λ₂ and λ₅ from the second incident port 203', where the wavelengths λ₁ and λ₄ input by the first band-pass filter 2001 of the first combiner-splitter structure 201 are from the sixth band-pass filter 2001 of the second combiner-splitter structure 201.

The sixth band-pass filter 2001 of the third combiner-splitter structure 201-3 is further configured to input a signal having the wavelengths λ₁ and λ₄ from the second incident port 203', and the fifth band-pass filter 2001 is further configured to input a signal having the wavelengths λ₁ and λ₄ from the first incident port 203. The fifth band-pass filter 2001 and the sixth band-pass filter 2001 are respectively configured to transmit one and the other of the wavelengths λ₁ and λ₄. For example, the fifth band-pass filter 2001 transmits the wavelength λ₁, and the sixth band-pass filter 2001 transmits the wavelength λ₄, or vice versa. The two total reflection structures in the second combiner-splitter structure 201 are configured to reflect all the input signals. In this way, the fifth band-pass filter in the second combiner-splitter structure is further configured to output a signal having the wavelengths λ₁,λ₂,λ₄, and λ₅ to the second common port 204'.

Similarly, this application further provides more general descriptions, which are specifically as follows.

Based on the more general descriptions in FIG. 7, as shown in FIG. 9, the at least one group of combiner-splitter structures in the WDM component may further include a third combiner-splitter structure.

The third combiner-splitter structure includes two band-pass filters and two total reflection structures.

The two band-pass filters included in the third combiner-splitter structure include a fifth band-pass filter and a sixth band-pass filter.

The two total reflection structures included in the third combiner-splitter structure include a fifth total reflection structure and a sixth total reflection structure.

The fifth band-pass filter is configured to: transmit the F_{1,2}^{th} wavelength incident from the first incident port I_{1,2}, and reflect the F_{1,1}^{th} wavelength.

The fifth total reflection structure is configured to reflect the F_{1,2}^{th} wavelength from the fifth band-pass filter.

The sixth total reflection structure is configured to reflect the F_{1,1}^{th} wavelength from the fifth band-pass filter.

The sixth band-pass filter is configured to: transmit the F_{1,1}^{th} wavelength from the sixth total reflection structure, and reflect the F_{1,2}^{th} wavelength from the fifth total reflection structure.

The first band-pass filter is configured to receive a signal having the F_{1,1}^{th} wavelength and the F_{1,2}^{th} wavelength from the sixth band-pass filter.

The second incident port I_{2,1} is configured to input a second input signal M₂ of a first channel having two wavelengths, an E_{2,1}^{th} wavelength and an E_{2,2}^{th} wavelength. The second incident port I_{2,2} is configured to input a second input signal N₂ of a second channel having two wavelengths, an F_{2,1}^{th} wavelength and an F_{2,2}^{th} wavelength.

The second band-pass filter is further configured to: transmit the E_{2,1}^{th} wavelength incident from the second incident port I_{2,1}, and reflect the E_{2,2}^{th} wavelength.

The second total reflection structure is further configured to reflect the E_{2,1}^{th} wavelength from the second band-pass filter.

The first total reflection structure is further configured to reflect the E_{2,2}^{th} wavelength from the second band-pass filter.

The first band-pass filter is further configured to: transmit the E_{2,2}^{th} wavelength from the first total reflection structure, and reflect the E_{2,1}^{th} wavelength from the second band-pass filter.

The at least one group of combiner-splitter structures further includes a third combiner-splitter structure.

The third combiner-splitter structure includes two band-pass filters and two total reflection structures.

The two band-pass filters included in the third combiner-splitter structure include a fifth band-pass filter and a sixth band-pass filter.

The two total reflection structures included in the third combiner-splitter structure include a fifth total reflection structure and a sixth total reflection structure.

The sixth band-pass filter is configured to transmit the F_{2,1}^{th} wavelength incident from the second incident port I_{2,2}, and reflect the E_{2,2}^{th} wavelength and the E_{2,1}^{th} wavelength that are from the first band-pass filter and the F_{2,2}^{th} wavelength.

The sixth total reflection structure is configured to reflect the F_{2,2}^{th} wavelength from the sixth band-pass filter.

The fifth total reflection structure is configured to reflect the F_{2,1}^{th} wavelength, the E_{2,2}^{th} wavelength, and the E_{2,1}^{th} wavelength that are from the sixth band-pass filter.

The fifth band-pass filter is configured to: transmit the F_{2,2}^{th} wavelength from the sixth total reflection structure, and reflect the F_{2,1}^{th} wavelength, the E_{2,2}^{th} wavelength, and the E_{2,1}^{th} wavelength that are from the fifth total reflection structure.

The second common port is configured to output a single-channel multi-wavelength signal Q₂, where wavelengths of the multi-wavelength signal Q₂ include the E_{2,1}^{th} wavelength, the E_{2,2}^{th} wavelength, the F_{2,1}^{th} wavelength, and the F_{2,2}^{th} wavelength.

It may be understood that, in the foregoing more general solution, the E_{1,1}^{th} wavelength and the E_{1,2}^{th} wavelength respectively correspond to the wavelengths λ₂ and λ₅ in FIG. 9, and the F_{1,1}^{th} wavelength and the F_{1,2}^{th} wavelength respectively correspond to the wavelengths λ₁ and λ₄ in FIG. 9. The first band-pass filter corresponds to a band-pass filter in an upper-left corner of the first combiner-splitter structure 201-1 in FIG. 9, and the second band-pass filter corresponds to a band-pass filter in a lower-right corner of the first combiner-splitter structure 201-1 in FIG. 9. The fifth band-pass filter corresponds to a band-pass filter in an upper-left corner of the third combiner-splitter structure 201-3 in FIG. 9, and the sixth band-pass filter corresponds to a band-pass filter in a lower-right corner of the third combiner-splitter structure 201-3 in FIG. 9.

By using the WDM component provided in the foregoing embodiment, combination of dual-wavelength signals of two channels can be implemented, that is, a signal of one channel having four wavelengths is obtained. In addition, combination of double-density dual-wavelength signals of two channels is further implemented, that is, signals of two channels having four wavelengths are obtained. This further reduces optical signal processing costs.

It may be understood that, based on the WDM component shown in any one of FIG. 7 to FIG. 9, more combiner-splitter structures and corresponding incident ports may be further included, to support combination of dual-wavelength signals of more channels and combination of double-density dual-wavelength signals of more channels. A specific solution is not described herein again.

The foregoing WDM component based on the band-pass filter may also be implemented based on the TFF.

FIG. 10 is a diagram of a structure of a TFF configured to implement a band-pass filtering function.

The structure is similar to the solution shown in FIG. 5. A difference lies in that a band-stop filter disposed in the TFF is replaced with the band-pass filter 2001. In this case, for example, a port a is still configured to input wavelengths λ₁ to λ₆, and a passband range of a band-pass filter includes the wavelength λ₁, but does not include the other wavelengths. Based on a feature of the band-pass filter, a port b of the TFF is configured to output the wavelengths λ₂ to λ₆, and a port d is configured to output the wavelength λ₁. If a port c of the TFF is configured to input the wavelengths λ₁ to λ₆, a port d is configured to output the wavelengths λ₂ to λ₆, and the port b is configured to output the wavelength λ₁.

Based on the TFF in FIG. 10, an embodiment of this application may provide a TFF-based WDM component.

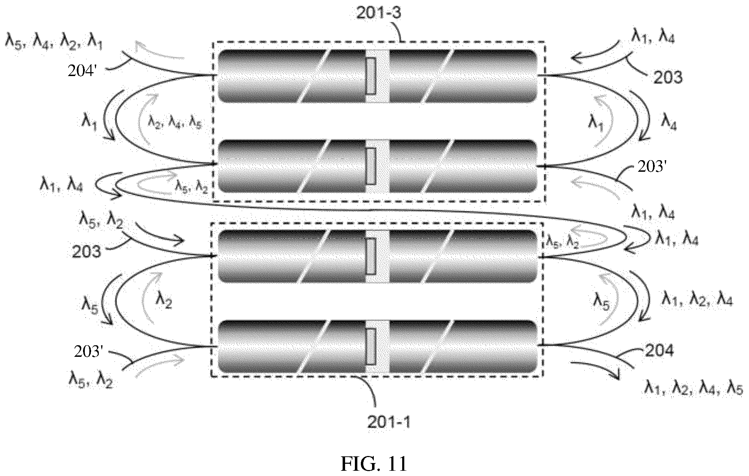

FIG. 11 is a diagram of a structure of a WDM component based on a band-pass TFF.

The WDM component may implement the function of the WDM component shown in FIG. 9.

The WDM component may not only combine dual-wavelength signals of two channels into a four-wavelength signal of one channel, but also combine double-density dual-wavelength signals of two channels, that is, obtain four-wavelength signals of two channels.

It can be learned that the WDM component includes four band-pass TFFs, where every two band-pass TFFs form the combiner-splitter structure shown in FIG. 7 or FIG. 9. For example, two lower band-pass TFFs in the four band-pass TFFs in FIG. 11 may form the first combiner-splitter structure 201-1 shown in FIG. 7 or FIG. 9, and two upper band-pass TFFs may form the third combiner-splitter structure 201-3 shown in FIG. 9. The third combiner-splitter structure 201-3 is optional.

An upper band-pass TFF in the first combiner-splitter structure 201-1, namely, a first band-pass TFF (corresponding to a first band-pass filter), transmits, to a port d, a wavelength λ₂ in wavelengths λ₂ and λ₅ input through a port a, reflects, to a port d, wavelengths λ₁ and λ₄ input through a port c, and reflects, to a port b, the wavelength λ₅ in the wavelengths λ₂ and λ₅ input through the port a. The port b is connected with a lower band-pass TFF, that is, a port a of a second band-pass TFF (corresponding to a second band-pass filter). The port d is connected with a port c of the second band-pass TFF. The second band-pass TFF transmits the wavelength λ₅ to the port d, and reflects, to the port d, the wavelengths λ₁, λ₂, and λ₄ input through the port c, to obtain a signal having the wavelengths λ₁,λ₂,λ₄, and λ₅ output by the port d. A first common port 204 outputs the signal having the wavelengths λ₁,λ₂,λ₄, and λ₅ that are from the port d of the second band-pass TFF.

Optionally, an upper band-pass TFF in the third combiner-splitter structure 201-3, namely, a fifth band-pass TFF (corresponding to a fifth band-pass filter), transmits, to a port b, a wavelength λ₁ in wavelengths λ₁ and λ₄ input through a port c, and reflects, to a port d, the wavelength λ₄ in the wavelengths λ₁ and λ₄ input through the port c. The port b is connected with a lower band-pass TFF, that is, a port a of a sixth band-pass TFF (corresponding to a sixth band-pass filter). The port d is connected with a port c of the sixth band-pass TFF. The sixth band-pass TFF transmits the wavelength λ₄ to the port b, and reflects, to the port b, the wavelength λ₁ input through the port a, to obtain a signal having the wavelengths λ₁ and λ₄ output by the port b. The port b of the sixth band-pass TFF is connected with the port c of the first band-pass TFF, and a signal having the wavelengths λ₁ and λ₄ is input to the first band-pass TFF.

Optionally, the port b of the second band-pass TFF is further configured to input a signal having the wavelengths λ₁ and λ₄, and the port d of the sixth band-pass TFF is further configured to input a signal having the wavelengths λ₁ and λ₄, so that the port a of the fifth band-pass TFF may further output a signal having the wavelengths λ₁,λ₂,λ₄, and λ₅ to obtain a signal having four wavelengths of a second channel.

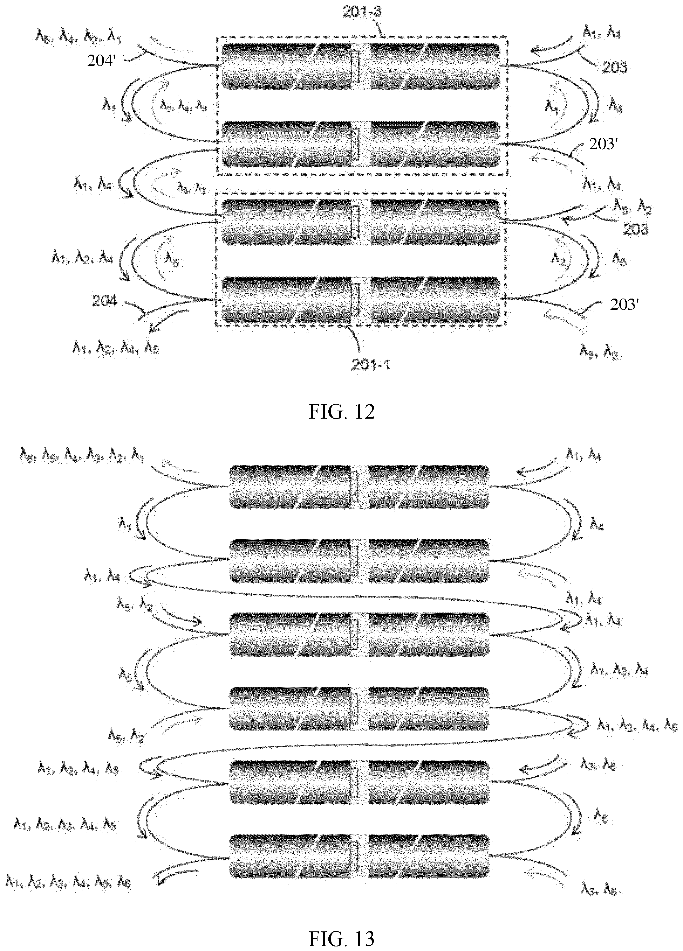

It may be understood that, due to structural symmetry of the TFF, connections of the foregoing band-pass TFFs may be changed. For example, connections of the TFF shown in FIG. 11 may be changed to connections shown in FIG. 12. To be specific, the port b of the sixth band-pass TFF may be connected with the port a of the first band-pass TFF. The port c of the first band-pass TFF is configured to input the signal having the wavelengths λ₂ and λ₅, and the port b of the second band-pass TFF is configured to output the signal having the wavelengths λ₁,λ₂,λ₄, and λ₅. Optionally, when the WDM is a double-density WDM, the port d of the second band-pass TFF is further configured to input the signal having the wavelengths λ₂ and λ₅.

Optionally, similar to the structure shown in FIG. 11, a WDM component for combining dual-wavelength signals of three channels into a six-wavelength signal of one channel may be further provided. Further, a double-density WDM component for combining double-density dual-wavelength signals of three channels may be further provided, that is, a WDM component for obtaining six-wavelength signals of two channels.

Optionally, FIG. 13 is a diagram of a structure. For specific descriptions, refer to FIG. 11. That is, a combiner-splitter structure is added, which includes two lowest band-pass TFFs in FIG. 13, and is configured to input the signal having the wavelengths λ₃ and λ₆, and combine the wavelengths λ₃ and λ₆ with the wavelengths λ₁,λ₂,λ₄, and λ₅ input to the combiner-splitter structure, to obtain the signal with the wavelengths λ₁ to λ₆.

An embodiment of this application further provides a WDM component based on a band-stop filter. A structure of the WDM component is shown in FIG. 7. That is, in the structure shown in FIG. 7, the band-stop filter may also be configured to combine dual-wavelength signals of two channels. In the first combiner-splitter structure, the filter in the upper-left corner is the first band-stop filter, and the filter in the lower-right corner is the second band-stop filter. The first band-stop filter and the second band-stop filter respectively reflect one and the other of the wavelengths λ₂ and λ₅. For example, the first band-stop filter reflects the wavelength λ₂, and the second band-stop filter reflects the wavelength λ₅. Both the first band-stop filter and the second band-stop filter transmit the wavelengths λ₁ and λ₄. In this way, the second band-stop filter may also be configured to output the signal having the wavelengths λ₁,λ₂,λ₄, and λ₅.

Correspondingly, the structures shown in FIG. 8 and FIG. 9 are also applicable to the band-stop filter. In this case, only a corresponding wavelength in a passband range needs to be changed to a wavelength in a stopband range, and a wavelength in the stopband range needs to be changed to a wavelength in the passband range.

Correspondingly, the WDM component based on the band-stop filter may also be implemented based on the band-stop TFF, that is, the TFF shown in FIG. 5.

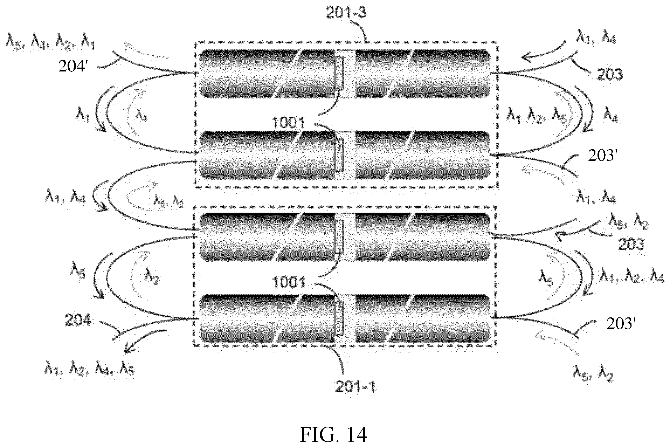

FIG. 14 is a diagram of a structure of a double-density WDM component based on a band-stop TFF. The second incident port 203' is optional, and the second common port 204 is also optional.

It may be understood that, based on the structure of the band-stop TFF, the double-density WDM component based on the band-stop TFF in FIG. 14 may be further changed to another structure, as long as the function of the foregoing WDM component based on the band-stop filter is implemented. This is not limited herein.

It may be understood that the foregoing Z-Block structure or TFF structure is an example, and the WDM components provided in embodiments of this application may alternatively be implemented in another manner, for example, an arrayed waveguide grating (arrayed waveguide grating, AWG), an interleaver (interleaver, ITL) filter, or a reconfigurable optical add/drop multiplexer (reconfigurable optical add/drop multiplexer, ROADM). This is not limited herein.

Optionally, the total reflection structure in embodiments of this application may be implemented by using an optical fiber.

Based on the foregoing structures, an embodiment of this application further provides a WDM component manufacturing method.

The manufacturing method includes obtaining a corresponding WDM component based on a filter, a Z-block, or a TFF as described in the foregoing embodiments.

For specific descriptions of the components in the Z-block, specific descriptions of the TFFs in the TFF, such as one or more of functions, connections, or settings, or descriptions of the filters, refer to the descriptions in any one of the foregoing embodiments. Details are not described herein again.

Further, based on the WDM component provided in the foregoing embodiments, an embodiment of this application may further provide a transmitting end and/or a receiving end.

The sending end combines optical waves by using the WDM component provided in the foregoing embodiments, and the receiving end splits optical waves by using the WDM component provided in the foregoing embodiments.

The transmitting end may be an access network device, a core network device, or a split device in the access network device, for example, a BBU or an RRU, a CU node or a DU node, or a split device in the core network device. This is not limited herein.

The receiving end may be an access network device, a core network device, or a split device in the access network device, for example, a BBU or an RRU, a CU node or a DU node, or a split device in the core network device. This is not limited herein.

An embodiment of this application further provides a communication system, including the transmitting end and/or the receiving end in the foregoing embodiments.

Embodiments of this application may be used alone or used in combination. This is not limited herein.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to a magnetic storage component (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

It should be understood that in the foregoing embodiments, terms such as "first" and "second" are merely intended to distinguish different objects, and should not constitute any limitation on this application.

It should be further understood that the term "and/or" describes an association relationship between associated objects and represents that three relationships may exist. For example, A and/or B may represent the following three cases: Only A exists, both A and B exist, and only B exists. The character "/" usually indicates an "or" relationship between associated objects. "At least one" means one or more. "At least one of A and B" is similar to "A and/or B", is used to describe an association relationship between associated objects, and represents that there may be three relationships. For example, at least one of A and B may represent the following three cases: Only A exists, both A and B exist, and only B exists.

A person of ordinary skill in the art may be aware that the units and algorithm steps described with reference to examples in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division of the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wavelength division multiplexing WDM component, comprising:
at least two first incident ports, at least two band-stop filter groups, a first low-pass or high-pass filter group, and a first common port, wherein
the at least two first incident ports comprise a first incident port I_{1,1} and a first incident port I_{1,2}, the first incident port I_{1,1} is configured to input a first input signal M₁ of a first channel having X1 wavelengths, and the first incident port I_{1,2} is configured to input a first input signal N₁ of a second channel having Y1 wavelengths;
the at least two band-stop filter groups comprise a first band-stop filter group and a second band-stop filter group;
X1 first band-stop filters in the first band-stop filter group are configured to split the incident input signal M₁ of the first channel having the X1 wavelengths into single-wavelength signals of X1 channels: a signal M_{1,1} to a signal M_{1,X1}, wherein the X1 wavelengths comprise an E_{1,1}^{th} wavelength to an E_{1,X1}^{th} wavelength, the single-wavelength signals of the X1 channels: the signal M_{1,1} to the signal M_{1,X1} are in a one-to-one correspondence with the E_{1,1}^{th} wavelength to the E_{1,X1}^{th} wavelength, the E_{1,1}^{th} wavelength to the E_{1,X1}^{th} wavelength are respectively in stopband ranges of the X1 first band-stop filters, and an i1^{th} first band-stop filter in the X1 first band-stop filters is configured to: reflect a signal M_{1,i1} of an E_{1,i1}^{th} wavelength, and transmit a signal that is of a first another wavelength and that is input to the i1^{th} first band-stop filter, wherein X1 is an integer greater than 1, i1 is an integer ranging from 1 to X1, and the first another wavelength belongs to the E_{1,1}^{th} wavelength to the E_{1,X1}^{th} wavelength;
Y1 second band-stop filters in the second band-stop filter group are configured to split the incident input signal N₁ of the second channel having the Y1 wavelengths into single-wavelength signals of Y1 channels: a signal N_{1,1} to a signal N_{1,Y1}, wherein the Y1 wavelengths comprise an F_{1,1}^{th} wavelength to an F_{1,Y1}^{th} wavelength, the single-wavelength signals of the Y1 channels: the signal N_{1,1} to the signal N_{1,Y1} are in a one-to-one correspondence with the F_{1,1}^{th} wavelength to the F_{1,Y1}^{th} wavelength, the F_{1,1}^{th} wavelength to the F_{1,Y1}^{th} wavelength are respectively in stopband ranges of corresponding second band-stop filters in the Y1 second band-stop filters, and a j1^{th} second band-stop filter in the Y1 second band-stop filters is configured to: reflect a signal N_{1,j1} of an F_{1,j1}^{th} wavelength, and transmit a signal that is of a second another wavelength and that is input to the j1^{th} second band-stop filter, wherein Y1 is an integer not less than 1, j 1 is an integer ranging from 1 to Y1, and the second another wavelength belongs to the F_{1,1}^{th} wavelength to the F_{1,Y1}^{th} wavelength;
W1 second band-stop filters in the second band-stop filter group are further configured to combine the single-wavelength signals of the X1 channels: the signal M_{1,1} to the signal M_{1,X1} with the single-wavelength signals of the Y1 channels respectively: the signal N_{1,1} to the signal N_{1,Y1}, to obtain multi-wavelength signals T_{1,t1=1...W1} of W1 channels, wherein W1 is a larger value in X1 and Y1; when X1 is greater than Y1, the W1 second band-stop filters comprise the Y1 second band-stop filters; when X1 is less than Y1, the W1 second band-stop filters are a part of the Y1 second band-stop filters; or when X1 is equal to Y1, the W1 second band-stop filters are the Y1 second band-stop filters; the j1^{th} second band-stop filter in the Y1 second band-stop filters is further configured to transmit a signal M_{1,i1} that is input to the j1^{th} second band-stop filter, to obtain a multi-wavelength signal T_{1,t1}; and the multi-wavelength signal T_{1,t1} has the E_{1,i1}^{th} wavelength and the F_{1,j1}^{th} wavelength, wherein t1 is an integer ranging from 1 to W1;
the first low-pass or high-pass filter group comprises Z1 first low-pass or high-pass filters and is configured to combine multi-wavelength signals P_{1,k1=1...Z1} of Z1 channels to obtain a single-channel multi-wavelength output signal Q₁, a multi-wavelength signal P_{1,t1} of a t1^{th} channel in multi-wavelength signals P_{1,t1=1...W1} of W1 channels in the multi-wavelength signals P_{1,k1=1...Z1} of the Z1 channels comprises a multi-wavelength signal T_{1,t1} of a t1^{th} channel in the multi-wavelength signals T_{1,t1=1...W1} of the W1 channels, the Z1 first low-pass or high-pass filters comprise W1 first low-pass or high-pass filters, the multi-wavelength signals P_{1,t1=1...W1} of the W1 channels are respectively in stopband ranges of corresponding first low-pass or high-pass filters in the W1 first low-pass or high-pass filters, and a t1^{th} first low-pass or high-pass filter in the W1 first low-pass or high-pass filters is configured to: reflect the multi-wavelength signal P_{1,t1} of the t1^{th} channel, and transmit a signal that is of another wavelength and that is input to the t1^{th} first low-pass or high-pass filter, wherein k1 is an integer ranging from 1 to Z1, and Z1 is an integer greater than or equal to W1; and
the first common port is configured to output the single-channel multi-wavelength output signal Q₁ obtained by the first low-pass or high-pass filter group.

2. The WDM component according to claim 1, wherein X1=Y1.

3. The WDM component according to claim 2, wherein X1=Y1=2, W1=2, and Z1=2.

4. The WDM component according to any one of claims 1 to 3, wherein the at least two first incident ports further comprise a first incident port I_{1,3}, and the first incident port I_{1,3} is configured to input a first input signal C₁ of a third channel having two wavelengths;
the at least two band-stop filter groups further comprise a third band-stop filter group, and two third band-stop filters in the third band-stop filter group are configured to split the incident input signal C₁ of the third channel having the two wavelengths into single-wavelength signals of two channels: a signal C_{1,1} and a signal C_{1,2}, wherein the two wavelengths comprise a G_{1,1}^{th} wavelength and a G_{1,2}^{th} wavelength, and the single-wavelength signals of the two channels: the signal C_{1,1} and the signal C_{1,2} are in a one-to-one correspondence with the G_{1,1}^{th} wavelength and the G_{1,2}^{th} wavelength, and the G_{1,1}^{th} wavelength and the G_{1,2}^{th} wavelength are respectively in stopband ranges of corresponding third band-stop filters in the two third band-stop filters, wherein a 1^{st} third band-stop filter in the two third band-stop filters is configured to: reflect the signal C_{1,1} of the G_{1,1}^{th} wavelength, and transmit the signal C_{1,2} that is of the G_{1,2}^{th} wavelength and that is input to the 1^{st} third band-stop filter, and a 2^{nd} third band-stop filter is configured to reflect the signal C_{1,2} of the G_{1,2}^{th} wavelength;
the two third band-stop filter groups are further configured to combine multi-wavelength signals of two channels: a signal T_{1,1} and a signal T_{1,2} from two second band-stop filters with the single-wavelength signals of the two channels respectively: the signal C_{1,1} and the signal C_{1,2}, to obtain multi-wavelength signals R_{1,1} and R_{1,2} of two channels, wherein each of the two third band-stop filters is further configured to transmit the signal T_{1,1} or T_{1,2} that is input to the third band-stop filter to obtain the multi-wavelength signal R_{1,1} or R_{1,2}, wherein the multi-wavelength signal R_{1,1} has the E_{1,1}^{th} wavelength, the F_{1,1}^{th} wavelength, and the G_{1,1}^{th} wavelength, and the multi-wavelength signal R_{1,2} has the E_{1,2}^{th} wavelength, the F_{1,2}^{th} wavelength, and the G_{1,2}^{th} wavelength; and
a multi-wavelength signal P_{1,1} in multi-wavelength signals P_{1,1} and P_{1,2} of two channels comprises the multi-wavelength signal R_{1,1}, the multi-wavelength signal P_{1,2} comprises the multi-wavelength signal R_{1,2}, the multi-wavelength signals P_{1,1} and P_{1,2} of the two channels are respectively in stopband ranges of corresponding first low-pass or high-pass filters of the two first low-pass or high-pass filters, a 1^{st} first low-pass or high-pass filter in the two first low-pass or high-pass filters is configured to reflect the multi-wavelength signal P_{1,1} of a first channel, and a 2^{nd} first low-pass or high-pass filter in the two first low-pass or high-pass filters is configured to: reflect the multi-wavelength signal P_{1,2} of a second channel, and transmit the multi-wavelength signal P_{1,1} that is input to the 2^{nd} first low-pass or high-pass filter, to combine the multi-wavelength signal P_{1,1} and the multi-wavelength signal P_{1,2} into the single-channel multi-wavelength output signal Q₁, wherein the single-channel multi-wavelength output signal Q₁ has the E_{1,1}^{th} wavelength, the F_{1,1}^{th} wavelength, the G_{1,1}^{th} wavelength, the E_{1,2}^{th} wavelength, the F_{1,2}^{th} wavelength, and the G_{1,2}^{th} wavelength.

5. The WDM component according to claim 4, wherein the E_{1,1}^{th} wavelength, the F_{1,1}^{th} wavelength, the G_{1,1}^{th} wavelength, the E_{1,2}^{th} wavelength, the F_{1,2}^{th} wavelength, and the G_{1,2}^{th} wavelength are six wavelengths used for sparse wavelength division multiplexing CWDM.

6. The WDM component according to any one of claims 1 to 5, further comprising:
at least two second incident ports, a second low-pass or high-pass filter group, and a second common port, wherein
the at least two second incident ports comprise a second incident port I_{2,1} and a second incident port I_{2,2}, the second incident port I_{2,1} is configured to input a second input signal M₂ of a first channel having X2 wavelengths, and the second incident port I_{2,2} is configured to input a second input signal N₂ of a second channel having Y2 wavelengths;
X2 first band-stop filters in the X1 first band-stop filters in the first band-stop filter group are further configured to split the X2 wavelengths of the incident input signal M₂ of the first channel having X3 wavelengths into single-wavelength signals of X2 channels: a signal M_{2,1} to a signal M_{2,X2}, wherein the X2 wavelengths comprise an E_{2,1}^{th} wavelength to an E_{2,X2}^{th} wavelength, the single-wavelength signals of the X2 channels: the signal M_{2,1} to the signal M_{2,X2} are in a one-to-one correspondence with the E_{2,1}^{th} wavelength to the E_{2,X2}^{th} wavelength, the E_{2,1}^{th} wavelength to the E_{2,X2}^{th} wavelength are respectively in stopband ranges of the X2 first band-stop filters, and the i1^{th} first band-stop filter in the X1 first band-stop filters is further configured to: reflect a signal M_{2,i1} of an E_{2,i1}^{th} wavelength, and transmit a signal that is of a third another wavelength and that is input to the i1^{th} first band-stop filter, wherein X2 is an integer not less than 1 and not greater than X1, the third another wavelength belongs to the E_{2,1}^{th} wavelength to the E_{2,X2}^{th} wavelength, and X3 is an integer greater than or equal to X2;
Y2 second band-stop filters in the Y1 second band-stop filters of the second band-stop filter group are further configured to split the Y2 wavelengths in the incident input signal N₂ of the second channel having Y3 wavelengths into single-wavelength signals of Y2 channels: a signal N_{2,1} to a signal N_{2,Y2}, the Y2 wavelengths comprise an F_{2,1}^{th} wavelength to an F_{2,Y2}^{th} wavelength, the single-wavelength signals of the Y2 channels: the signal N_{2,1} to the signal N_{2,Y2} are in a one-to-one correspondence with the F_{2,1}^{th} wavelength to the F_{2,Y2}^{th} wavelength, the F_{2,1}^{th} wavelength to the F_{2,Y2}^{th} wavelength are respectively in stopband ranges of corresponding second band-stop filters in the Y2 second band-stop filters, and the j1^{th} second band-stop filter in the Y1 second band-stop filters is further configured to: reflect a signal N_{2,j1} of an F_{2,j1}^{th} wavelength, and transmit a signal that is of a fourth another wavelength and that is input to the j1^{th} second band-stop filter, wherein the fourth another wavelength belongs to the F_{2,1}^{th} wavelength to the F_{2,Y2}^{th} wavelength, Y2 is an integer not less than 1 and not greater than Y1, and Y3 is an integer greater than or equal to Y2;
W2 first band-stop filters in the first band-stop filter group are further configured to combine single-wavelength signals of Y2 channels: the signal N_{2,1} to a signal N_{2,X2} with single-wavelength signals of X2 channels respectively: the signal M_{2,1} to a signal M_{2,Y1} to obtain multi-wavelength signals T_{2,t2=1...W2} of W2 channels, wherein W2 is a larger value in X2 and Y2; when X2 is greater than Y2, the W2 first band-stop filters comprise the X2 first band-stop filters; when X2 is less than Y2, the W2 first band-stop filters are a part of the X2 first band-stop filters; or when X2 is equal to Y2, the W2 first band-stop filters are the X2 first band-stop filters; the i 1 th first band-stop filter in the X1 first band-stop filters is further configured to transmit the signal N_{2,j1} that is input to the i1^{th} first band-stop filter to obtain a multi-wavelength signal T_{2,t2}, and the multi-wavelength signal T_{2,t2} has the E_{2,i1}^{th} wavelength and the F_{2,j1}^{th} wavelength, wherein t2 is an integer ranging from 1 to W2;
the second low-pass or high-pass filter group comprises Z2 first low-pass or high-pass filters and is configured to combine multi-wavelength signals P_{2,k2=1...Z2} of Z2 channels to obtain a single-channel multi-wavelength output signal Q₂, a multi-wavelength signal P_{2,t2} of a t2^{th} channel in multi-wavelength signals P_{2,t2=1...W2} of W2 channels in the multi-wavelength signals P_{2,k2=1...Z2} of the Z2 channels comprises a multi-wavelength signal T_{2,t2} of a t2^{th} channel in the multi-wavelength signals T_{2,t2=1...W2} of the W2 channels, the Z2 first low-pass or high-pass filters comprise W2 first low-pass or high-pass filters, the multi-wavelength signals P_{2,t1=1...W2} of the W2 channels are respectively in stopband ranges of corresponding first low-pass or high-pass filters in the W2 first low-pass or high-pass filters, and a t2^{th} first low-pass or high-pass filter in the W2 first low-pass or high-pass filters is configured to: reflect the multi-wavelength signal P_{2,t2} of the t2^{th} channel, and transmit a signal that is of another wavelength and that is input to the t2^{th} first low-pass or high-pass filter, wherein k2 is an integer ranging from 1 to Z2, and Z2 is an integer greater than or equal to W2; and
the second common port is configured to output the single-channel multi-wavelength output signal Q₂ obtained by the second low-pass or high-pass filter group.

7. The WDM component according to claim 6, wherein X2=Y2=Z2=2.

8. The WDM component according to claim 7, wherein the E_{2,1}^{th} wavelength is equal to the E_{1,1}^{th} wavelength, the E_{2,2}^{th} wavelength is equal to the E_{1,2}^{th} wavelength, the F_{2,1}^{th} wavelength is equal to the F_{1,1}^{th} wavelength, and the F_{2,2}^{th} wavelength is equal to the F_{1,2}^{th} wavelength.

9. The WDM component according to claim 6, wherein a 1^{st} second low-pass or high-pass filter in the second low-pass or high-pass filter group is a total reflector.

10. The WDM component according to any one of claims 3 to 9, further comprising a Z-Block structure, wherein a plurality of isosceles right-angle triangular prism notches are separately disposed on two sides of the Z-Block structure, a right-angle surface of the isosceles right-angle triangular prism is perpendicular to the notch, bevels of isosceles right-angle triangular prisms of notches on a same side are disposed in parallel, the notches on the two sides are disposed oppositely in a peer-to-peer manner with bevels disposed in parallel, notches on a first side comprise a notch used for the first incident port, notches on a second side comprise a notch used for the first common port, a first triangular prism filter is disposed in each of the notch used for the first incident port and a peer notch of the notch used for the first incident port, a band-stop filter thin film is plated on a bevel of the first triangular prism filter, a second triangular prism filter is disposed in each of the notch used for the first common port and a peer notch of the notch used for the first common port, a first low-pass or high-pass filter thin film is plated on a bevel of the second triangular prism filter, the band-stop filter thin film is a band-stop filter comprised in the at least two band-stop filter groups, and the first low-pass or high-pass filter thin film is a low-pass or high-pass filter comprised in the first low-pass or high-pass filter group.

11. The WDM component according to claim 10, wherein the first low-pass or high-pass filter thin film plated on the bevel of the second triangular prism filter disposed in the peer notch of the notch used for the first common port is used for total reflection.

12. The WDM component according to claim 10 or 11, wherein the peer notch of the notch used for the first incident port is further used for the second incident port, the notches on the first side further comprise a notch used for the second common port, a third triangular prism filter is disposed in each of the notch used for the second common port and a peer notch of the notch used for the second common port, a second low-pass or high-pass filter thin film is plated on a bevel of the third triangular prism filter, the second low-pass or high-pass filter thin film is a low-pass or high-pass filter comprised in the second low-pass or high-pass filter group.

13. The WDM component according to claim 12, wherein the second low-pass or high-pass filter thin film plated on the bevel of the third triangular prism filter disposed in the peer notch of the notch used for the second common port is used for total reflection.

14. The WDM component according to any one of claims 1 to 13, wherein a 1^{st} first low-pass or high-pass filter in the first low-pass or high-pass filter group is a total reflector.

15. A wavelength division multiplexing WDM component, comprising:
at least two first incident ports, at least one group of combiner-splitter structures, and a first common port, wherein
the at least one group of combiner-splitter structures comprises a first combiner-splitter structure;
the first combiner-splitter structure comprises two band-pass filters and two total reflection structures;
the at least two first incident ports comprise a first incident port I_{1,1} and a first incident port I_{1,2}, the first incident port I_{1,1} is configured to input a first input signal M₁ of a first channel having two wavelengths, an E_{1,1}^{th} wavelength and an E_{1,2}^{th} wavelength, the first incident port I_{1,2} is configured to input a first input signal N₁ of a second channel having two wavelengths, an F_{1,1}^{th} wavelength and an F_{1,2}^{th} wavelength;
the two band-pass filters comprise a first band-pass filter and a second band-pass filter;
the two total reflection structures comprise a first total reflection structure and a second total reflection structure;
the first band-pass filter is configured to: transmit the E_{1,2}^{th} wavelength in the input signal M₁ of the first channel that is incident from the first incident port I_{1,1} and that has the two wavelengths, and reflect the E_{1,1}^{th} wavelength;
the first band-pass filter is further configured to reflect the F_{1,1}^{th} wavelength and the F_{1,2}^{th} wavelength in the input signal N₁ of the second channel that is incident from the first incident port I_{1,2} and that has the two wavelengths;
the first total reflection structure is configured to reflect the E_{1,1}^{th} wavelength from the first band-pass filter;
the second total reflection structure is configured to reflect the E_{1,2}^{th} wavelength, the F_{1,1}^{th} wavelength, and the F_{1,2}^{th} wavelength that are from the first band-pass filter;
the second band-pass filter is configured to: transmit the E_{1,1}^{th} wavelength from the first total reflection structure, and reflect the E_{1,2}^{th} wavelength, the F_{1,1}^{th} wavelength, and the F_{1,2}^{th} wavelength; and
the first common port is configured to output a single-channel multi-wavelength signal Q₁, wherein wavelengths of the multi-wavelength signal Q₁ comprise the E_{1,1}^{th} wavelength, the E_{1,2}^{th} wavelength, the F_{1,1}^{th} wavelength, and the F_{1,2}^{th} wavelength.

16. The WDM component according to claim 15, wherein the at least two first incident ports comprise a first incident port I_{1,3}, configured to input a first input signal C₁ of a third channel having two wavelengths, a G_{1,1}^{th} wavelength and a G_{1,2}^{th} wavelength;
the at least one group of combiner-splitter structures further comprises a second combiner-splitter structure;
the second combiner-splitter structure comprises two band-pass filters and two total reflection structures;
the two band-pass filters comprised in the second combiner-splitter structure comprise a third band-pass filter and a fourth band-pass filter;
the two total reflection structures comprised in the second combiner-splitter structure comprise a third total reflection structure and a fourth total reflection structure;
the third band-pass filter is configured to: reflect the G_{1,1}^{th} wavelength in the input signal C₁ of the third channel that is incident from the first incident port I_{1,3} and that has two wavelengths, and transmit the G_{1,2}^{th} wavelength, wherein the G_{1,2}^{th} wavelength is in a passband range of the third band-pass filter;
the third band-pass filter is further configured to reflect the E_{1,1}^{th} wavelength, the E_{1,2}^{th} wavelength, the F_{1,1}^{th} wavelength, and the F_{1,2}^{th} wavelength that are from the second band-pass filter;
the third total reflection structure is configured to reflect the G_{1,2}^{th} wavelength, the E_{1,1}^{th} wavelength, the E_{1,2}^{th} wavelength, the F_{1,1}^{th} wavelength, and the F_{1,2}^{th} wavelength that are from the third band-pass filter;
the fourth total reflection structure is configured to reflect the G_{1,1}^{th} wavelength from the third band-pass filter;
the fourth band-pass filter is configured to: transmit the G_{1,1}^{th} wavelength from the fourth total reflection structure, and reflect the G_{1,2}^{th} wavelength, the E_{1,2}^{th} wavelength, the E_{1,1}^{th} wavelength, the F_{1,1}^{th} wavelength, and the F_{1,2}^{th} wavelength that are from the third total reflection structure; and
the single-channel multi-wavelength signal Q₁ output by the first common port further comprises the G_{1,1}^{th} wavelength and the G_{1,2}^{th} wavelength.

17. The WDM component according to claim 15, wherein the at least one group of combiner-splitter structures further comprises a third combiner-splitter structure;
the third combiner-splitter structure comprises two band-pass filters and two total reflection structures;
the two band-pass filters comprised in the third combiner-splitter structure comprise a fifth band-pass filter and a sixth band-pass filter;
the two total reflection structures comprised in the third combiner-splitter structure comprise a fifth total reflection structure and a sixth total reflection structure;
the fifth band-pass filter is configured to: transmit the F_{1,2}^{th} wavelength incident from the first incident port I_{1,2}, and reflect the F_{1,1}^{th} wavelength;
the fifth total reflection structure is configured to reflect the F_{1,2}^{th} wavelength from the fifth band-pass filter;
the sixth total reflection structure is configured to reflect the F_{1,1}^{th} wavelength from the fifth band-pass filter;
the sixth band-pass filter is configured to: transmit the F_{1,1}^{th} wavelength from the sixth total reflection structure, and reflect the F_{1,2}^{th} wavelength from the fifth total reflection structure; and
the first band-pass filter is configured to receive a signal having the F_{1,1}^{th} wavelength and the F_{1,2}^{th} wavelength from the sixth band-pass filter.

18. The WDM component according to claim 16 or 17, further comprising at least two second incident ports I_{2,1} and I_{2,2} and a second common port, wherein
the second incident port I_{2,1} is configured to input a second input signal M₂ of a first channel having two wavelengths, an E_{2,1}^{th} wavelength and an E_{2,2}^{th} wavelength, and the second incident port I_{2,2} is configured to input a second input signal N₂ of a second channel having two wavelengths, an F_{2,1}^{th} wavelength and an F_{2,2}^{th} wavelength;
the second band-pass filter is further configured to: transmit the E_{2,1}^{th} wavelength incident from the second incident port I_{2,1}, and reflect the E_{2,2}^{th} wavelength;
the second total reflection structure is further configured to reflect the E_{2,1}^{th} wavelength from the second band-pass filter;
the first total reflection structure is further configured to reflect the E_{2,2}^{th} wavelength from the second band-pass filter;
the first band-pass filter is further configured to: transmit the E_{2,2}^{th} wavelength from the first total reflection structure, and reflect the E_{2,1}^{th} wavelength from the second band-pass filter;
the sixth band-pass filter is configured to: transmit the F_{2,1}^{th} wavelength incident from the second incident port I_{2,2}, and reflect the E_{2,2}^{th} wavelength and the E_{2,1}^{th} wavelength that are from the first band-pass filter and the F_{2,2}^{th} wavelength;
the sixth total reflection structure is configured to reflect the F_{2,2}^{th} wavelength from the sixth band-pass filter;
the fifth total reflection structure is configured to reflect the F_{2,1}^{th} wavelength, the E_{2,2}^{th} wavelength, and the E_{2,1}^{th} wavelength that are from the sixth band-pass filter;
the fifth band-pass filter is configured to: transmit the F_{2,2}^{th} wavelength from the sixth total reflection structure, and reflect the F_{2,1}^{th} wavelength, the E_{2,2}^{th} wavelength, and the E_{2,1}^{th} wavelength that are from the fifth total reflection structure; and
the second common port is configured to output a single-channel multi-wavelength signal Q₂, wherein wavelengths of the multi-wavelength signal Q₂ comprise the E_{2,1}^{th} wavelength, the E_{2,2}^{th} wavelength, the F_{2,1}^{th} wavelength, and the F_{2,2}^{th} wavelength.

19. The WDM component according to claim 16, further comprising at least two second incident ports I_{2,1} and I_{2,2} and a second common port, wherein
the second incident port I_{2,1} is configured to input a second input signal M₂ of a first channel having two wavelengths, an E_{2,1}^{th} wavelength and an E_{2,2}^{th} wavelength, and the second incident port I_{2,2} is configured to input a second input signal N₂ of a second channel having two wavelengths, an F_{2,1}^{th} wavelength and an F_{2,2}^{th} wavelength;
the second band-pass filter is further configured to: transmit the E_{2,1}^{th} wavelength incident from the second incident port I_{2,1}, and reflect the E_{2,2}^{th} wavelength;
the second total reflection structure is further configured to reflect the E_{2,1}^{th} wavelength from the second band-pass filter;
the first total reflection structure is further configured to reflect the E_{2,2}^{th} wavelength from the second band-pass filter;
the first band-pass filter is further configured to: transmit the E_{2,2}^{th} wavelength from the first total reflection structure, and reflect the E_{2,1}^{th} wavelength from the second band-pass filter;
the at least one group of combiner-splitter structures further comprises a third combiner-splitter structure;
the third combiner-splitter structure comprises two band-pass filters and two total reflection structures;
the two band-pass filters comprised in the third combiner-splitter structure comprise a fifth band-pass filter and a sixth band-pass filter;
the two total reflection structures comprised in the third combiner-splitter structure comprise a fifth total reflection structure and a sixth total reflection structure;
the sixth band-pass filter is configured to: transmit the F_{2,1}^{th} wavelength incident from the second incident port I_{2,2}, and reflect the E_{2,2}^{th} wavelength and the E_{2,1}^{th} wavelength that are from the first band-pass filter and the F_{2,2}^{th} wavelength;
the sixth total reflection structure is configured to reflect the F_{2,2}^{th} wavelength from the sixth band-pass filter;
the fifth total reflection structure is configured to reflect the F_{2,1}^{th} wavelength, the E_{2,2}^{th} wavelength, and the E_{2,1}^{th} wavelength that are from the sixth band-pass filter;
the fifth band-pass filter is configured to: transmit the F_{2,2}^{th} wavelength from the sixth total reflection structure, and reflect the F_{2,1}^{th} wavelength, the E_{2,2}^{th} wavelength, and the E_{2,1}^{th} wavelength that are from the fifth total reflection structure; and
the second common port is configured to output a single-channel multi-wavelength signal Q₂, wherein wavelengths of the multi-wavelength signal Q₂ comprise the E_{2,1}^{th} wavelength, the E_{2,2}^{th} wavelength, the F_{2,1}^{th} wavelength, and the F_{2,2}^{th} wavelength.

20. The WDM component according to claim 19, further comprising a second incident port I_{2,3}, configured to input a second input signal C₂ of a third channel having two wavelengths, a G_{2,1}^{th} wavelength and a G_{2,2}^{th} wavelength, wherein
the fourth band-pass filter is further configured to: transmit the G_{2,1}^{th} wavelength in the second input signal C₂ of the third channel that is incident from the second incident port I_{2,3} and that has the two wavelengths, and reflect the G_{2,2}^{th} wavelength;
the third total reflection structure is further configured to reflect the G_{2,1}^{th} wavelength from the fourth band-pass filter;
the fourth total reflection structure is further configured to reflect the G_{2,2}^{th} wavelength from the fourth band-pass filter;
the third band-pass filter is further configured to: reflect the G_{2,1}^{th} wavelength from the third total reflection structure, and transmit the G_{2,2}^{th} wavelength from the fourth total reflection structure;
the second band-pass filter is further configured to reflect the G_{2,1}^{th} wavelength and the G_{2,2}^{th} wavelength from the third band-pass filter;
the second total reflection structure is further configured to reflect the G_{2,1}^{th} wavelength and the G_{2,2}^{th} wavelength from the second band-pass filter;
the first band-pass filter is further configured to reflect the G_{2,1}^{th} wavelength and the G_{2,2}^{th} wavelength from the second total reflection structure;
the sixth band-pass filter is further configured to reflect the G_{2,1}^{th} wavelength and the G_{2,2}^{th} wavelength from the first band-pass filter;
the fifth total reflection structure is further configured to reflect the G _{2,1}^{th} wavelength and the G_{2,2}^{th} wavelength from the sixth band-pass filter;
the fifth band-pass filter is further configured to reflect the G_{2,1}^{th} wavelength and the G_{2,2}^{th} wavelength from the fifth total reflection structure; and
the single-channel multi-wavelength signal Q₂ output by the second common port further comprises the G_{2,1}^{th} wavelength and the G_{2,2}^{th} wavelength.

21. The WDM component according to claim 15, comprising two four-port thin film filters TFFs, a first TFF and a second TFF, wherein four ports comprise a port a, a port b, a port c, and a port d, and each TFF comprises a sleeve and two fiber collimators;
the first band-pass filter is fastened to the first TFF and located between two fiber collimators of the first TFF; and the second band-pass filter is fastened to the second TFF and located between two fiber collimators of the second TFF;
for an optical wave input through a port a of each TFF, transmitted light of the optical wave is output from a port d, and reflected light is output from a port b, and for an optical wave input through a port c, transmitted light of the optical wave is output from the port b, and reflected light is output from the port d;
the first incident port I_{1,1} corresponds to a port a of the first TFF, and the first incident port I_{1,2} corresponds to a port c of the first TFF;
a port b of the first TFF is connected with a port a of the second TFF, and a port d of the first TFF is connected with a port c of the second TFF; and
a port d of the second TFF corresponds to the first common port.

22. The WDM component according to claim 16, comprising four four-port TFFs, a first TFF, a second TFF, a third TFF, and a fourth TFF, wherein four ports comprise a port a, a port b, a port c, and a port d, and each TFF comprises a sleeve and two fiber collimators;
the first band-pass filter is fastened to the first TFF and located between two fiber collimators of the first TFF; the second band-pass filter is fastened to the second TFF and located between two fiber collimators of the second TFF; the third band-pass filter is fastened to the third TFF and located between two fiber collimators of the third TFF; and the fourth band-pass filter is fastened to the fourth TFF and located between two fiber collimators of the fourth TFF;
for an optical wave input through a port a of each TFF, transmitted light of the optical wave is output from a port d, and reflected light is output from a port b, and for an optical wave input through a port c, transmitted light of the optical wave is output from the port b, and reflected light is output from the port d;
the first incident port I_{1,1} corresponds to a port a of the first TFF, and the first incident port I_{1,2} corresponds to a port c of the first TFF;
a port b of the first TFF is connected with a port a of the second TFF, and a port d of the first TFF is connected with a port c of the second TFF;
a port d of the second TFF is connected with a port a of the third TFF, and a port c of the third TFF corresponds to the first incident port I_{1,3};
a port b of the third TFF is connected with a port a of the fourth TFF, and a port d of the third TFF is connected with a port c of the fourth TFF; and
a port d of the fourth TFF corresponds to the second common port.

23. The WDM component according to any one of claims 15 to 20, wherein each combiner-splitter structure is implemented by using two TFFs, for an optical wave input through a port a of each TFF, transmitted light of the optical wave is output from a port d, and reflected light is output from a port b, and for an optical wave input through a port c, transmitted light of the optical wave is output from a port b, and reflected light is output from the port d.

24. A wavelength division multiplexing WDM component, comprising:
at least two first exit ports, at least two band-stop filter groups, a first low-pass or high-pass filter group, and a first common port, wherein
the first common port is configured to input a single-channel multi-wavelength output signal Q₁, wherein wavelengths of the single-channel multi-wavelength output signal Q₁ comprise an E_{1,1}^{th} wavelength to an E_{1,X1}^{th} wavelength, and an F_{1,1}^{th} wavelength to an F_{1,Y1}^{th} wavelength;
the first low-pass or high-pass filter group comprises Z1 first low-pass or high-pass filters and is configured to obtain multi-wavelength signals P_{1,k1=1...Z1} of Z1 channels through splitting the single-channel multi-wavelength output signal Q₁, a multi-wavelength signal P_{1,t1} of a t1^{th} channel in multi-wavelength signals P_{1,t1=1...W1} of W1 channels in the multi-wavelength signals P_{1,k1=1...Z1} of the Z1 channels comprises a multi-wavelength signal T_{1,t1} of a t1^{th} channel in multi-wavelength signals T_{1,t1=1...W1} of W1 channels, the Z1 first low-pass or high-pass filters comprise W1 first low-pass or high-pass filters, the multi-wavelength signals P_{1,t1=1...W1} of the W1 channels are respectively in stopband ranges of corresponding first low-pass or high-pass filters in the W1 first low-pass or high-pass filters, and a t1^{th} first low-pass or high-pass filter in the W1 first low-pass or high-pass filters is configured to: reflect the multi-wavelength signal P_{1,t1} of the t1^{th} channel, and transmit a signal that is of another wavelength and that is input to the t1^{th} first low-pass or high-pass filter, wherein k1 is an integer ranging from 1 to Z1, and Z1 is an integer greater than or equal to W1; W1 second band-stop filters in the second band-stop filter group are configured to split the multi-wavelength signals T_{1,t1=1...W1} of the W1 channels into single-wavelength signals of X1 channels: a signal M_{1,1} to a signal M_{1,X1}, and single-wavelength signals of Y1 channels: a signal N_{1,1} to a signal N_{1,Y1}, wherein W1 is a larger value in X1 and Y1; when X1 is greater than Y1, the W1 second band-stop filters comprise Y1 second band-stop filters; when X1 is less than Y1, the W1 second band-stop filters are a part of Y1 second band-stop filters; or when X1 is equal to Y1, the W1 second band-stop filters are Y1 second band-stop filters; the single-wavelength signals of the X1 channels: the signal M_{1,1} to the signal M_{1,X1} are in a one-to-one correspondence with the E_{1,1}^{th} wavelength to the E_{1,X1}^{th} wavelength, and the single-wavelength signals of the Y1 channels: the signal N_{1,1} to the signal N_{1,Y1} are in a one-to-one correspondence with the F_{1,1}^{th} wavelength to the F_{1,Y1}^{th} wavelength, and the F_{1,1}^{th} wavelength to the F_{1,Y1}^{th} wavelength are respectively in stopband ranges of corresponding second band-stop filters of the Y1 second band-stop filters, and a j1^{th} second band-stop filter in the Y1 second band-stop filters is configured to: transmit an E_{1,i1}^{th} wavelength in the signal T_{1,t1} that is input to the j 1^{th} second band-stop filter, to obtain a single-wavelength signal M_{1,il}; and reflect an F_{1,j1}^{th} wavelength in the signal T_{1,t1} that is input to the j1^{th} second band-stop filter, to obtain a single-wavelength signal N_{1,j1}, wherein t1 is an integer ranging from 1 to W1, Y1 is an integer not less than 1, and j 1 is an integer ranging from 1 to Y1;
the Y1 second band-stop filters are further configured to combine the single-wavelength signals of the Y1 channels: the signal N_{1,1} to the signal N_{1,Y1}, into an output signal N₁ of a second channel having Y1 wavelengths, and the j 1^{th} second band-stop filter in the Y1 second band-stop filters is further configured to transmit a signal that is of a second another wavelength and that is input to the j1^{th} second band-stop filter, wherein the second another wavelength belongs to the F_{1,1}^{th} wavelength to the F_{1,Y1}^{th} wavelength and does not comprise the F_{1,j1}^{th} wavelength;
X1 first band-stop filters in the first band-stop filter group are configured to combine the single-wavelength signals of the X1 channels: the signal M_{1,1} to the signal M_{1,X1}, into an output signal M₁ of a first channel having X1 wavelengths, wherein the X1 wavelengths comprise the E_{1,1}^{th} wavelength to the E_{1,X1}^{th} wavelength, the E_{1,1}^{th} wavelength to the E_{1,X1}^{th} wavelength are respectively in stopband ranges of the X1 first band-stop filters, and an i 1 th first band-stop filter in the X1 first band-stop filters is configured to: reflect a signal M_{1,i1} of an E_{1,i1}^{th} wavelength, and transmit a signal that is of a first another wavelength and that is input to the i1^{th} first band-stop filter, wherein X1 is an integer greater than 1, i1 is an integer ranging from 1 to X1, and the first another wavelength belongs to the E_{1,1}^{th} wavelength to the E_{1,X1}^{th} wavelength; and
the at least two first exit ports comprise a first exit port I_{1,1} and a first exit port I_{1,2}, the first exit port I_{1,1} is configured to output the first output signal M₁ of the first channel having the X1 wavelengths, and the first incident port I_{1,2} is configured to output the first output signal N₁ of the second channel having the Y1 wavelengths.

25. A wavelength division multiplexing WDM component, comprising:
at least two first exit ports, at least one group of combiner-splitter structures, and a first common port, wherein
the first common port is configured to input a single-channel multi-wavelength signal Q₁, wherein wavelengths of the multi-wavelength signal Q₁ comprise an E_{1,1}^{th} wavelength, an E_{1,2}^{th} wavelength, an F_{1,1}^{th} wavelength, and an F_{1,2}^{th} wavelength;
the at least one group of combiner-splitter structures comprises a first combiner-splitter structure;
the first combiner-splitter structure comprises two band-pass filters and two total reflection structures;
the at least two first exit ports comprise a first exit port I_{1,1} and a first exit port I_{1,2}, the first exit port I_{1,1} is configured to output a first output signal M₁ of a first channel having two wavelengths, the E_{1,1}^{th} wavelength and the E_{1,2}^{th} wavelength, and the first exit port I_{1,2} is configured to output a first output signal N₁ of a second channel having two wavelengths, the F_{1,1}^{th} wavelength and the F_{1,2}^{th} wavelength;
the two band-pass filters comprise a first band-pass filter and a second band-pass filter;
the two total reflection structures comprise a first total reflection structure and a second total reflection structure;
the second band-pass filter is configured to: transmit the E_{1,1}^{th} wavelength of the single-channel multi-wavelength signal Q₁ from the first common port, and reflect the E_{1,2}^{th} wavelength, the F_{1,1}^{th} wavelength, and the F_{1,2}^{th} wavelength;
the first total reflection structure is configured to reflect the E_{1,1}^{th} wavelength from the second band-pass filter;
the second total reflection structure is configured to reflect the E_{1,2}^{th} wavelength, the F_{1,1}^{th} wavelength, and the F_{1,2}^{th} wavelength that are from the second band-pass filter; and
the first band-pass filter is configured to: transmit the E_{1,2}^{th} wavelength from the second total reflection structure, reflect the F_{1,1}^{th} wavelength and the F_{1,2}^{th} wavelength from the second total reflection structure, and reflect the E_{1,1}^{th} wavelength from the first total reflection structure, to obtain the first output signal M₁ of the first channel having the two wavelengths, the E_{1,1}^{th} wavelength and the E_{1,2}^{th} wavelength, and the output signal N₁ of the second channel having the two wavelengths, the F_{1,1}^{th} wavelength and the F_{1,2}^{th} wavelength.

26. A wavelength division multiplexing WDM component, comprising two four-port thin film filters TFFs, a first TFF and a second TFF, wherein four ports comprise a port a, a port b, a port c, and a port d, and each TFF comprises a sleeve and two fiber collimators;
a first band-pass filter is fastened to the first TFF and located between two fiber collimators of the first TFF; and a second band-pass filter is fastened to the second TFF and located between two fiber collimators of the second TFF;
a signal 1 having a first wavelength and a second wavelength is input through a port a of the first TFF, the first wavelength is in a passband range of the first TFF, the second wavelength is in a stopband range of the first TFF, a signal 1-1 of the first wavelength is output from a port d, and a signal 1-2 of the second wavelength is output from a port b;
a signal 2 having a third wavelength and a fourth wavelength is input through a port c of the first TFF, both the third wavelength and the fourth wavelength are in the stopband range of the first TFF, and the signal 2 having the third wavelength and the fourth wavelength is output from the port d;
the port c of the first TFF is connected with a port a of the second TFF, and the port d of the first TFF is connected with a port c of the second TFF; and
the second wavelength is in a passband range of the second TFF, the first wavelength, the third wavelength, and the fourth wavelength are all in the stopband range of the first TFF, and the signal 1-1 having the first wavelength, the signal 1-2 having the second wavelength, and the signal 2 having the third wavelength and the fourth wavelength are combined into a signal having four wavelengths output from a port d of the second TFF.

27. A wavelength division multiplexing WDM component, comprising two four-port thin film filters TFFs, a first TFF and a second TFF, wherein four ports comprise a port a, a port b, a port c, and a port d, and each TFF comprises a sleeve and two fiber collimators;
a first band-stop filter is fastened to the first TFF and located between two fiber collimators of the first TFF; and a second band-stop filter is fastened to the second TFF and located between two fiber collimators of the second TFF;
a signal 1 having a first wavelength and a second wavelength is input through a port a of the first TFF, the first wavelength is in a stopband range of the first TFF, the second wavelength is in a passband range of the first TFF, a signal 1-1 of the first wavelength is output from a port b, and a signal 1-2 of the second wavelength is output from a port d;
a signal 2 having a third wavelength and a fourth wavelength is input through a port c of the first TFF, both the third wavelength and the fourth wavelength are in the stopband range of the first TFF, and the signal 2 having the third wavelength and the fourth wavelength is output from the port b;
the port b of the first TFF is connected with a port a of the second TFF, and the port d of the first TFF is connected with a port c of the second TFF; and
the second wavelength is in a stopband range of the second TFF, the first wavelength, the third wavelength, and the fourth wavelength are all in the passband range of the first TFF, and the signal 1-1 having the first wavelength, the signal 1-2 having the second wavelength, and the signal 2 having the third wavelength and the fourth wavelength are combined into a signal having four wavelengths output from a port d of the second TFF.

28. A wavelength division multiplexing WDM component, comprising a Z-Block structure, wherein a plurality of isosceles right-angle triangular prism notches are separately disposed on two sides of the Z-Block structure, a right-angle surface of the isosceles right-angle triangular prism is perpendicular to the notch, bevels of isosceles right-angle triangular prisms of notches on a same side are disposed in parallel, the notches on the two sides are disposed oppositely in a peer-to-peer manner with bevels disposed in parallel, notches on a first side comprise a notch used for a first incident port, notches on a second side comprise a notch used for a first common port, a first triangular prism filter is disposed in each of the notch used for the first incident port and a peer notch of the notch used for the first incident port, a band-stop filter thin film is plated on a bevel of the first triangular prism filter, a second triangular prism filter is disposed in each of the notch used for the first common port and a peer notch of the notch used for the first common port, a first low-pass or high-pass filter thin film is plated on a bevel of the second triangular prism filter, the band-stop filter thin film is configured to reflect a wavelength in a specific range, the first incident port is configured to input a single-channel signal having X wavelengths, the quantity X of wavelengths of a signal input through at least one notch used for the first incident port in the plurality of notches is an integer greater than 1, the first low-pass or high-pass filter thin film is configured to combine signals obtained based on single-channel multi-wavelength signals that are input through a plurality of first incident ports and that pass through the band-stop filter thin film, to obtain a single-channel signal having Y wavelengths, Y is a sum of quantities X of wavelengths input through all the first incident ports, and the first common port is configured to output the single-channel signal that has the Y wavelengths and that is obtained through combination, wherein the bevel of the first triangular prism filter is parallel to a bevel of an isosceles right-angle triangular prism of a notch in which the first triangular prism filter is located, and the bevel of the second triangular prism filter is parallel to a bevel of an isosceles right-angle triangular prism of a notch in which the second triangular prism filter is located.

29. The WDM component according to claim 28, wherein the first low-pass or high-pass filter thin film plated on the bevel of the second triangular prism filter disposed in the peer notch of the notch used for the first common port is used for total reflection.

30. The WDM component according to claim 28 or 29, wherein the peer notch of the notch used for the first incident port is further used for a second incident port, the notches on the first side further comprise a notch used for a second common port, a third triangular prism filter is disposed in each of the notch used for the second common port and a peer notch of the notch used for the second common port, a second low-pass or high-pass filter thin film is plated on a bevel of the third triangular prism filter, the second low-pass or high-pass filter thin film is configured to combine signals obtained based on single-channel signals having M wavelengths that are input through second incident ports and that pass through the band-stop filter thin film, to obtain a single-channel signal having N wavelengths, and the second common port is configured to output the single-channel signal that has the N wavelengths and that is obtained through combination, wherein the quantity M of wavelengths of a signal input through at least one notch used for the second incident port in a plurality of peer notches is an integer greater than 1, N is a sum of quantities M of wavelengths input through all the second incident ports, and the bevel of the third triangular prism filter is parallel to a bevel of an isosceles right-angle triangular prism of a notch in which the third triangular prism filter is located.

31. A communication device, comprising the WDM component according to any one of claims 1 to 30.

32. A WDM component manufacturing method, wherein the WDM component according to any one of claims 1 to 30 is obtained by disposing and/or connecting components in the WDM component according to any one of claims 1 to 30.
